(19)

Europäisches
Patentamt
European
Patent Office
Office européen
des brevets

(11) **EP 2 560 145 A2**

(12) **EUROPEAN PATENT APPLICATION**

(43) Date of publication:
**20.02.2013 Bulletin 2013/08**

(51) Int Cl.:
***G06T 19/00*** *(2011.01)*

(21) Application number: **12180799.4**

(22) Date of filing: **17.08.2012**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **18.08.2011 EP 11064251**

(71) Applicant: **Layar B.V.**
**1017 HK Amsterdam (NL)**

(72) Inventors:
• **Hofmann, Klaus Michael**
**1018 AJ Amsterdam (NL)**
• **Van der Klein, Raimo Juhani**
**2134 XJ Hoofddorp (NL)**
• **Van der Lingen, Ronald**
**2624 PB Delft (NL)**
• **Van de Zandschulp, Klasien**
**6543 SV Nijmegen (NL)**

(74) Representative: **De Vries & Metman**
**Overschiestraat 180**
**1062 XK Amsterdam (NL)**

(54) **Methods and systems for enabling the creation of augmented reality content**

(57) Methods and systems for enabling creation of augmented reality content on a user device including a digital imaging part, a display, a user input part and an augmented reality client, wherein said augmented reality client is configured to provide an augmented reality view on the display of the user device using an live image data stream from the digital imaging part are disclosed. User input is received from the user input part to augment a target object that is at least partially seen on the display while in the augmented reality view. A graphical user interface is rendered to the display part of the user device, said graphical user interface enabling a user to author augmented reality content for the two-dimensional image.

FIG. 1

**Description**

FIELD OF INVENTION

The disclosure generally relates to methods and systems that enable the authoring and management of augmented reality content. In particular, though not necessarily, the disclosure relates to methods and systems for enabling a user to author augmented reality content onto real world objects.

BACKGROUND

Due to the increasing capabilities of multimedia equipment, mobile augmented reality (AR) applications are rapidly expanding. These AR applications allow enrichment of a real scene with additional content (also referred to as "augmentation" or "augmented reality content"), which may be displayed to a user in the form of a graphical layer overlaying the real-world scenery.

Example augmented reality content may include two-dimensional graphics, three-dimensional objects that aims to augment a real world object with virtual content. Augmented reality content may exist in a three-dimensional (virtual) space. In particular, at least one of placement/position, shape, size, movement and any other spatial attributes of the augmented reality content correspond to a virtual three-dimensional space. For example, a rectangular billboard poster as augmented reality content has at least properties related to: position, orientation, size and shape that exists in a three-dimensional augmented reality space.

While an experienced user may program and create three-dimensional objects easily using sophisticated three-dimensional graphics software running on a computer, a person without experience in creating virtual three-dimensional objects would find it difficult to create augmented reality content using devices such as a handheld tablet or mobile phone. The limited user interface offered by user devices hinders the authoring of three-dimensional objects because the user input methods and user interfaces does not easily allow the manipulation of objects in a three-dimensional space.

One traditional desktop solution includes a system discussed in "A pragmatic approach to Augmented Reality Authoring" by Matthias Haringer and Holger T. Regenbreht (2002). The system provides Augmented Reality authoring through the use of a well known 2D presentation program: Microsoft PowerPoint. A picture of the object to be augmented is placed on a master slide. Text, pictures, videos may be inserted into the slide using the inherent functions of PowerPoint. An order for the annotations may be defined as slide by slide and slide step by slide step. When finished, the presentation is exported from PowerPoint to PowerSpace. The 2D reference object on the master slide is replaced with a 3D geometry of the real world reference, and all slides and slide steps are displayed as 2D planes in 3D inside a PowerSpace Editor. Any user familiar with PowerPoint is able to create AR annotations using this system.

Although the system enables users with little AR programming experience to create AR content, such a system has several disadvantages. The complex PowerPoint and PowerSpace editors on a desktop environment is not suitable for use in a mobile device environment, especially on a handheld smart phone or tablet, where user inputs, display screen size/resolution, and computational resources are limited. Furthermore, the system requires the user to manually upload an existing image file of the object to be augmented to the master slide, and thus the system lacks the ability to augment objects "on-the-go". The user cannot (quickly) see the annotations in augmented reality view once the annotations are created, since the user can only see the annotations in the virtual PowerSpace editor. Moreover, the system lacks capabilities to enable a user to see augments made on different instances of the same real world object created by, e.g., other people, because the system only enables the viewing of annotations created for a particular master slide within the (single-user) editor environment.

Hence, it is desirable to provide methods and systems that facilitate the creation of augmented reality content that at least alleviate the problems disclosed herein. Furthermore, it is desirable to provide a platform that manages a collection of augmented reality content created by users.

SUMMARY

Augmented reality systems enable the visual presentation of augmented reality content over real objects in the real-world. Within the system, augmented reality content may be represented as objects occupying a three-dimensional virtual space of the real world. The augmented reality content may have a particular spatial relationship with the objects in the real world. For instance, a virtual billboard poster used as augmented reality content may be positioned on the North side of an office building, with the front of the poster facing outward from the office building. Accordingly, the poster has a position, size, shape, and/or orientation properties in relation to the virtual three-dimensional augmented reality space. In the context of this disclosure, the augmented reality space may include a virtual representation of the three-dimensional environment that represents the real world. Augmented reality content exists in the augmented reality space.

An augmented reality system or an augmented reality device may include a display part (e.g., LED screen) that shows the augmented reality space (referred to as "augmented reality view") by combining image frames from an live image data stream from a digital imaging part (e.g., camera) with the augmented reality content. Furthermore, the augmented reality system includes a user input part where a user may provide user input. For example, the user input part may include a touch screen. Typically, the touch screen or the user input part is limited to receiving user input in a two-dimensional space (e.g., receiving user input events associated with x, y coordinates). This poses a problem for users wanting to create three-dimensional objects in the virtual augmented reality space, because the two-dimensional user input does not correspond directly to the three-dimensional virtual space as seen by the user through the display part of the augmented reality device. If the user input is mapped to the three-dimensional space that is unnatural for the user (e.g., a user clicks on one of two buttons, the intended button does not become activated but the other button becomes activated due to a poor transformation of the user input event into three-dimensional space), user experience is degraded.

Furthermore, from the augmented reality system's perspective, there is a technical problem with processing user input that exists in the two-dimensional space. When the user input was intended to interact with objects in the three-dimensional virtual space, the user input received by the augmented reality system only exists in two-dimensional space, thereby leaving one degree of freedom where the system is free to interpret how the two-dimensional point may be projected into a three dimensional space. A coarse projection could be performed. But when a user is performing a task where precision matters, such as drawing or creating objects in three-dimensional space, user inputs may not be projected properly onto the real world objects existing in the augmented reality space. The situation may be worsened when the user device and the user may be continuously making small or large movements, causing further jitter in the accuracy of the projection.

When creating augmented reality content (e.g., drawing, sketching, etc.) on a two-dimensional plane, taking the user input and projecting the user input in three-dimensional space, the projection can be workable and drawing in three-dimensional context is possible in theory if given sufficient information about the user input in two-dimensional space and the user and surroundings hold still. If the projection processes has jitter, this jitter will also be visually apparent and present in the augmented reality content (e.g., drawing or sketch) itself. Touching the screen or providing any user input requiring physical input on a mobile user device generally also causes slight movement of the user device, causing even more problems in accuracy.

The user input in two-dimensional space may not provide sufficient information to accurately translate/project the two-dimensional user inputs into a three-dimensional space. For example, a user taps on the screen at position x, y. The augmented reality system is lacking information such as the desired direction of the tap (e.g., is the user directing the tap upwards or downwards and at what angle?) such that the x, y coordinates may be more accurately projected into a three-dimensional space. Accordingly, it is desirable to have methods and systems that enables users to create augmented reality content that at least alleviates some of the problems disclosed herein.

A method for enabling creation of augmented reality content (also referred to as user-generated content) on a user device including a digital imaging part, a display output, a user input part and an augmented reality client is disclosed. An example user device may be a mobile phone or a mobile computing tablet having a touch-sensitive or pressure-sensitive screen. Said augmented reality client is configured to provide an augmented reality view on the display output using an live image data stream from the digital imaging part. An augmented reality client, implemented at least in part as software running on the user device, preferably includes a graphics engine to compose image frames from a live image data stream to form an augmented reality view.

A first user input is received, preferably with a user event listener running on the user device, from the user input part to select a target object that is at least partially seen in the augmented reality view. A target object is an object of interest to which a user is wishing to add augmented reality content. A graphical user interface is rendered for display on the display output, said graphical user interface enabling a user to create the augmented reality content. In this disclosure, a graphical user interface comprises the visual aspect of a user interface as well as any software or hardware components that enable a user to manipulate the state of the user device and/or the augmented reality client.

The enabling step comprises creating a graphical user interface object (an object preferably in the software environment) having a two-dimensional image of the target object, said graphical user interface object enabling the user to author the augmented reality content on top of the two-dimensional image, and rendering the graphical user interface object for display on the display output.

The resulting graphical user interface (comprising graphics and user event listener(s), interactivity elements for enabling the receipt and processing user input thereby providing user interactivity) appears stuck to the display output screen, and the graphical user interface object (in software preferably) that makes up the graphical user interface is rendered such that the object is placed in parallel with the display output. As such, a plane of the graphical user interface object is substantially in parallel with a plane of the display output. Using the graphical user interface, a second user input representative of the augmented reality content authored using the graphical user interface is received, preferably with a user event listener running on the user device.

In one embodiment, graphical user interface for enabling the user to author the augmented reality content on top of the two-dimensional image using the graphical user interface is a what-you-see-is-what-you-get (WYSIWYG) editor that enables the capture of the spatial relationship between the second user input and the two-dimensional image of the target object. A WYSIWYG editor enables a user to draw directly onto the two-dimensional image, enabling a direct one to one mapping of the user input space (e.g., the screen resolution) with the two-dimensional image (e.g., the image resolution). In this manner, the content as provided by the user appears later in the augmented reality view as if the user had drawn directly onto the target object. The editor captures the information needed to display the augmented reality content in the correct position when it is rendered for display in augmented reality view.

In one embodiment, an image frame from the live image data stream is captured in response to receiving the first user input. The user input may include a user tapping on the user input part to indicate that he/she wishes to take a photo of the target object, to recognize the target object, to begin augmenting the object, etc. The captured image frame is processed to extract tracking features. Preferably using a tracker, a three dimensional pose information of the target object is determined on the basis of the extracted tracking features and the image data stream.

In one embodiment, the user may prefer to attach the augmented reality content onto the target in augmented reality view as quickly as possible, even before features are extracted at the remote object recognition/feature extraction system. Accordingly, the tracking features extracted locally on the user device have a quality that is lower than the quality of other tracking features that are associated with the target object and are extracted by an object recognition system remote from the user device. The processing of the image frame is performed if the tracking features from the object recognition system are not (yet) available at the user device.

If desired, higher quality tracking features may be provided by a feature extraction module in a system remote from the user device. In one embodiment, an image frame from the live image data stream is captured in response to receiving the first user input and the image frame is transmitted or a derivation of the image frame to an object recognition system remote from the user device. An identifier associated with the target object, tracking features and the two-dimensional image are received from the object recognition system. A three dimensional pose information of the target object is determined on the basis of the received tracking features and the image data stream.

In one embodiment, the user device further includes a tracker part. The tracker part, preferably at least partially implemented on the user device as software, comprises processes for estimating the pose information about the target object using for example an image captured from the live image stream. The tracker enables the generation of matrices that would later be used by a graphics engine to create transformed graphics objects so that augmented reality content appears (even though it is rendered in a two-dimensional space) to have a shape and pose in a three-dimensional virtual world.

Using the tracker part, the augmented reality content (sometimes part of a graphics object) is transformed by scaling, rotating and translating the augmented reality content based on three-dimensional pose information in the tracker part to generate a graphics object having the transformed augmented reality content. In some situations, the graphics object is created first with the non-transformed augmented reality content, and then the graphics object is transformed using the three-dimensional pose information in the tracker part to render the graphics object in perspective with the target object. In some situations, the augmented reality content is transformed first and then a graphics object is created in the three-dimensional environment for rendering and display. The graphics object is rendered for display in the display output, the graphics object appearing in perspective with the target object in the augmented reality view. In some embodiments, the graphics object is referred to as a graphical overlay that is used in combination with images from the live image feed in composing the augmented reality view.

One embodiment, the augmented reality content (sometimes part of a graphics object) is transformed by scaling, rotating and translating the augmented reality content based on (1) three-dimensional pose information in the tracker part and (2) the spatial relationship, to generate a graphics object having the transformed augmented reality content. The graphics object is rendered for display in the display output, the graphics object appearing in perspective with the target object in the augmented reality view.

The augmentation is preferably stored in a format and data object that is suitable for retrieval, storage, and manipulation. The augmentations are preferably maintained remotely from the user device for the long term. The augmentations are preferably easy to transform.

In one embodiment, the second user input is received representative of the augmented reality content through the graphical user interface object from the user input part. The second user input or a derivation of the second user input is stored as a graphics data file in a non-transient computer readable medium. The graphics data file is associated with the target object. The second user input may be converted from user input events into data for the graphics data file.

In one embodiment, the storing of the derivation of the second user input data comprises deriving a scalable vector graphic of the augmented reality content based on the second user input and using the scalable vector graphic as the derivation of the user input data. A scalable vector graphic may be used as the format to facilitate the transformation process, which may involve scaling, transforming, and rotating. Naturally, other types of formats may be used as long as the format facilitate the transformation of graphics.

To promote the addition and proliferation of the augmented reality content, various target objects and the associated augmented reality content may belong to users within a social community. The users and their target objects and/or augmented reality content may be associated with a user profile associated with the individual users and/or user devices. As such, the graphics data file may be associated with a user profile associated with the user device.

In one embodiment, the graphical user interface object comprises at least one of the following interactive parts for augmenting the target object: a drawing part for drawing on the two-dimensional image displayed on the display output, a stamping part for adding a copy of a stored image onto the two-dimensional image displayed on the display output, a three-dimensional drawing part for adding a three dimensional object to the target object, and a text part for adding a text onto the two-dimensional image displayed on the display output. The graphical user interface having at least one of these interactive parts facilitate the creation and authoring of content on top of the two-dimensional image of the target object.

As an extension, the two-dimensional image of the target object, the graphical user interface for authoring the content, the augmented reality content itself, and any other suitable graphics objects or graphical user interface objects may be flipped, attached and/or detached. Flipping comprises animating the object such that it is rotated around/about an axis in the plane of the object (preferably the object has a two-dimensional plane) by 180 degrees. Accordingly, the object having a front side facing one direction is turned from front to back to show a back side of the object as a result. Attaching involves taking an object and sticking it to a target object. The object is preferably animated to begin in a position parallel to the display output, and resulting in an end position being rendered in perspective with the target object. Detaching involves the reverse of the attaching processes, preferably animating an object rendered in perspective with a tracked object to an end position where the object is stuck to the display output (out of perspective and in parallel with the display output). User input is received from the user to either flip, attach or detach the object. The user input may include any suitable user input such as motion gesture, clicking, tapping, voice command, etc.

In one embodiment, a third user input is received, preferably by a user input event listener, to flip the two-dimensional image. The two-dimensional image is animated on the display output by showing an effect of flipping over the two-dimensional image and displaying content associated with the target object. In some embodiments, the graphics object is animated on the display output by showing an effect of flipping over the augmented reality content and displaying other content associated with the target object.

In another embodiment, a third user input is received, preferably by a user input event listener, to detach the graphics object from the target object. The graphics object is updated by scaling, transforming, and rotating the graphics object to having a pose where the graphics object has a two-dimensional plane substantially parallel to the plane of the display output.

In yet another embodiment, a third/fourth user input is received to attach the graphics object to the tracked object. Updated three-dimensional pose information of the tracked object is retrieved/received from the tracker part. The graphical object for display on the display output is updated by scaling, rotating and translating the graphical object based on the updated three-dimensional pose information.

In one embodiment, receiving a fifth user input to flip the graphics object, the graphics object having a first pose, such that the graphics object is rotated from the first pose to a second pose by substantially 180 degrees around an axis lying in the plane of the graphics object from the first pose to a second pose. Back-side content to be displayed on the display output for a back-side of the graphics object is retrieve/received. The back-side of the graphics object is updated to include the back-side content. An animated sequence for the graphics object is generated, the animated sequence including graphics from the first pose to the second pose by scaling, rotating and translating the graphics object.

An augmented reality client configured to enable creation of augmented reality content on a user device having a digital imaging part, a display output and a user input part. The augmented reality client comprises a user input event listener and a graphics engine. A user input event listener configured to receive a first user input through the user input part to select a target object that is at least partially seen in the augmented reality view. A user input event listener may be partially implemented in the operating system or the augmented reality content to listen for user input events coming from the user input part. User input events may include the type of event and the coordinates of the event itself, as well as any relevant timing information. A graphics engine is configured to render a graphical user interface to the display, said graphical user interface enabling a user to create the augmented reality content by creating a graphical user interface object having a two-dimensional image of the target object, said graphical user interface object enabling the user to author the augmented reality content on top of the two-dimensional image, rendering the graphical user interface object for display on the display output, wherein a plane of the graphical user interface object is substantially in parallel with a plane of the display. The user input event listener further configured to receive a second user input representative of the augmented reality content authored using the graphical user interface.

The disclosure may also relate to a computer program product, implemented on computer-readable non-transitory storage medium, wherein the computer program product may comprise software code portions configured for, when run a computer, executing the method steps according to any of the methods described in the present disclosure. The computer program product is preferably implemented at least in part in any of: a computer processor, an operating system, an augmented reality client, a graphics engine, a user input event listener, etc. of the user device.

A method for enabling creation of user-generated content on a user device associated with a digital imaging part, a display output, a user input part and an augmented reality client is disclosed. Said augmented reality client is configured to provide an augmented reality view on the display output using image data from the digital imaging part. A first user input is received from the user input part to select a target object displayed in said display output. A first graphical user interface is provided, said interface comprising a two-dimensional image of at least part of the target object, said graphical user interface being configured to receive second user input associated with user-generated content, preferably said user-generated content being aligned with said two-dimensional image. A third user input is received from the user input part to attach said user-generated content to said target object. In a tracker part of the augmented reality client, three-dimensional pose information associated with said selected target object is determined on the basis of at least an image of the target object from the digital imaging part. Said user-generated content is rendered for display in the display output, on the basis of said three-dimensional pose information such that the user-generated content is displayed in perspective with the target object, said user-generated content rendered matching the three-dimensional pose of said selected target object in the display output.

An augmented reality client configured to enable creation of user-generated content on a user device having a digital imaging part, a display output and a user input part is disclosed. The augmented reality client comprises a user input listeners, graphics engine, and a tracker part. A first user input listener (preferably software processes configured to listen for user input events) is configured to receive a first user input from the user input part to select a target object displayed in said display output. A graphics engine is configured to provide a first graphical user interface comprising a two-dimensional image of at least part of the target object, said graphical user interface being configured to receive second user input associated with user-generated content, preferably said user-generated content being aligned with said two-dimensional image. A second user input listener is configured to receive a third user input from the user input part to attach said user-generated content to said target object. A tracker part is configured to determine three-dimensional pose information associated with said selected target object on the basis of at least an image of the target object from the digital imaging part. The graphics engine is further configured to render said user-generated content for display in the display output, on the basis of said three-dimensional pose information such that the user-generated content is displayed in perspective with the target object, said user-generated content rendered matching the three-dimensional pose of said selected target object in the display output.

Graphical user interface for enabling the creation of user-generated content on a user device having a digital imaging part, a display output and a user input part is disclosed. The graphical user interface comprises three (display) states. A first display state comprises a first user input listener configured to receive a first user input from the user input part to select a target object displayed in said display output. A second display state, having a first transition from the first state in response to receiving the first user input, comprises a two-dimensional image of at least part of the target object, a second user input listener being configured to receive second user input associated with user-generated content, said user-generated content being preferably aligned with said two-dimensional image, and a third user input listener to receive a third user input from the user input part to attach said user-generated content to said target object. A third display state, having a second transition from the second state in response to receiving the third user input, comprises said user-generated content for display in the display output, said user-generated content being rendered on the basis of said three-dimensional pose information such that the user-generated content is displayed in perspective with the target object and matching the three-dimensional pose of said selected target object in the display output, said three-dimensional pose determined by a tracker part of the augmented reality client.

A user device having an augmented reality client (as disclosed herein), configured to enable creation of user-generated content, said user device having a digital imaging part, a display output and a user input part.

User input may be understood by one skilled in the art as including one or more user actions. For instance, a user input may include a tap of a user's finger on the screen. In another instance, a user input may include a gesture from a user (e.g., dragging a finger across a touch screen). In yet another instance, a user input may include a sequence of user actions. User input may include user actions in any suitable modality.

The disclosure will further be illustrated with reference to the attached drawings, which schematically show embodiments according to the disclosure. It will be understood that the disclosure is not in any way restricted to these specific embodiments.

BRIEF DESCRIPTION OF THE DRAWINGS

Aspects of the invention will be explained in greater detail by reference to exemplary embodiments shown in the drawings, in which:

FIG. 1 shows an illustrative system and data structure for enabling creation of augmented reality content according to one embodiment of the disclosure;
FIG. 2 shows an illustrative system for retrieving augmented reality content according to one embodiment of the disclosure;

**FIG. 3** shows an illustrative user device according to one embodiment of the disclosure;

**FIG. 4** shows illustrative wireframes of the user interaction with an illustrative augmented reality system according to one embodiment of the disclosure;

**FIG. 5** shows an illustrative system for enabling object recognition according to one embodiment of the disclosure;

**FIG. 6** shows an illustrative tracking system for determining the state of the scene in augmented reality, according to one embodiment of the disclosure; and

**FIG. 7** shows an illustrative data structure for a tracking resource, according to one embodiment of the disclosure.

DETAILED DESCRIPTION

To alleviate the problems disclosed herein, methods and systems are provided such that user input representing augmented reality content may be received and processed in a proper manner. Furthermore, graphical user interface is provided to facilitate the authoring user-generated augmented reality content. Moreover, an exemplary system is provided for managing augmented reality content associated with real world objects.

In one embodiment, the augmented reality system enables users to augment target objects in the real world with virtual content. Consider the situation where a user provides user input through a flat capacitive touch-sensitive display screen (e.g., touch screen or other similar user input part). A user would like to draw a virtual happy face on a postcard. The user may point the digital imaging part (e.g., camera) of the user device towards the postcard lying on a table and try to draw a happy face onto the postcard in augmented reality view. The augmented reality client may translate x, y coordinates of user input events from the user input part into the three-dimensional virtual space. However, a pair of x, y coordinates does not provide sufficient information to translate accurately into a three-dimensional space, especially if the postcard (or the surface of the real world object to be augmented) does not lie substantially in parallel with the display screen. Even if the x, y coordinates are translated properly into the flat surface of the postcard in virtual three-dimensional space, the continuous movement of the user in relation to the target object (or the target object moves in relation to the user) may cause undesirable jitter resulting in degradation of user experience.

Thus, rather than having a user provide input augmenting the target object directly in augmented reality view, an image of the target object is shown to the user in a what-you-see-is-what-you-get (WYSIWYG) editor to facilitate the authoring of augmented reality content. In other words, rather than allowing the user to create the content directly within the three-dimensional virtual space, the creation of content occurs in a two-dimensional environment where the user may more easily create content on a target object. Once the augmented reality content is created, the augmented reality client transforms the augmented reality content and sticks/places the content onto the target object in the three-dimensional virtual space.

In a sense, the problem of jitter and inaccurate projection of two-dimensional user input data into the three-dimensional space is alleviated when a user no longer has to draw directly onto the object within the three-dimensional virtual environment as seen through the augmented reality view. The technical solution enables the user to create augmented reality content in the two-dimensional space directly onto an image of the target object using a WYSIWYG editor, and that content is subsequently transformed appropriately onto the object by the augmented reality client.

The image of the target object preferably shows the object as if the user is looking at the object straight-on (as opposed to looking at the object from an angle or from the side). This feature preferably allows the user to add augmented reality content directly onto the object without requiring the augmented reality client to apply a projection/transformation of the user input onto a three-dimensional space. In one example, if the object is a magazine, the image would show the cover of the magazine in its rectangular form as if the camera is pointing in the normal direction of the magazine cover.

The image of the target object preferably shows a substantially flat surface of the target object, if the user input is to be provided in a two-dimensional space. In this manner, the user input provided on a two-dimensional space, such as user events in x, y coordinates has a substantially direct one-to-one correspondence with the flat surface of the target object in the real world. For example, the center of the magazine cover would substantially correspond to the center of the two-dimensional user input space. Likewise, the left-upper corner of the magazine cover would also substantially correspond to the left-upper corner of the user input space. One effect of this embodiment is that the target object preferably has a flat surface that makes the target object easily "augmentable". One example of an object that cannot be easily augmented is a tree. A tree has a complex three-dimensional shape that a two-dimensional input space cannot easily map onto.

In some embodiments, the tracking algorithms used in an augmented reality client may require the image of the target object to have a true 2-dimensional representation of the real world object (where the plane of the object is parallel to the plane of the representation, i.e., the display output part), otherwise the key feature points extracted would not have the correct distances between each other. Not having a substantially true 2-dimensional representation of the real world object as the reference image may negatively affect tracking and/or generation of augmented reality content. This image of the target object may be corrected through a cropping and/or unskewing process as discussed herein to provide a corrected/improved image of the target object, and a corrected image may be used as the reference image of the target object and/or the image seen through the content (WYSIWYG) editor.

The image of the target object as seen through the WYSIWYG editor may be an image captured by the digital imaging part of the user device or it may be a reference image stored on an server remote to the user device. For instance, if the reference image is not yet available on the user device, the image captured by the digital imaging part of the user device may be used in the WYSIWYG editor. Situations when the reference image is not yet available includes: the server has not recognized the target object in the image captured by the digital imaging part of the user device, the server has not provided the reference image to the user device, etc. In either case where the reference image or the image captured by the digital imaging part is displayed, the user is provided with an image of the target object of interest.

In one sense, the WYSIWYG editor allows the user to temporarily "detach" the user interaction from the real world object in the augmented reality environment to an editing environment where the target object can be easily manipulated and augmented. But yet, the augmented reality client still offers the ability to "attach" the augmented reality content back onto the real world object when desired. Moreover, the target object and any augmentations associated with the target object may become portable such that users may even augment the target object when the target object is not within the augmented reality view or even in proximity to the user.

A collection of target objects may be maintained and organized based on a fingerprint of an image of the target object in a server remote from the user device. The collection of target objects and their respective fingerprints enable the recognition of objects. To facilitate the management of augmentations associated with a particular target object, the remote server having the fingerprints may provide computer vision processes to enable the recognition of the object. Upon successful recognition of the target object, augmented reality content associated with the target object may then be provided to the user device for display.

The platform for managing augmented reality content generated by users enables community and social sharing and following of augmented reality content associated with target objects. The platform may provide a collection of tracking resources associated with a group of target objects to the user device such that a user may locally explore, hunt and track for any of the group of target objects in augmented reality view. One skilled in the art would appreciate that further extensions may be implemented to enable a community of users in adding, editing, following, removing and/or viewing augmented reality content associated with target objects using the user device.

The following passages describe exemplary implementations of the improved methods and systems for enabling creation of augmented reality content. Methods and systems for managing the augmented reality content are also discussed.

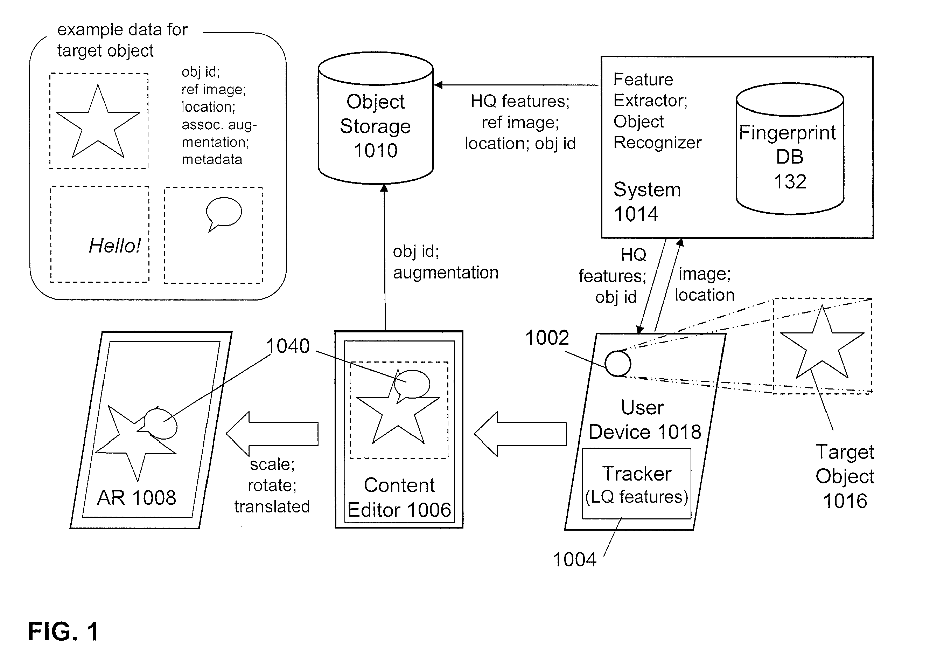

**FIG. 1** shows an illustrative system and data structure for enabling creation of augmented reality content according to one embodiment of the disclosure. While a user is in augmented reality view (or camera view), digital imaging part **1002** (e.g., a camera) captures an live image data stream of the real world and the frames from the live image data stream is shown to the user through a display part of the device (e.g., projection, LCD screen, LED screen). In some embodiments, the user may be in "scan mode", where a user moves around the surroundings to look for objects to recognize. In this example, a star (as target object **1016**) becomes within range of digital imaging part **1002** of user device **1018.** A user provides an input through a user input part of user device **1018** indicating that he or she desires to augment the object. A user input part may at least partly comprise hardware and/or software user interfaces (e.g., hardware buttons, digitally displayed graphical user interfaces through the display part, sensors on user device **1018).** For example, a user may tap the touch-sensitive display screen to indicate that he/she wishes to "scan" the object and begin augmentation. Besides explicit user input, the "scanning" process for object recognition may be triggered by location and/or pointing direction of the user device (e.g., a user has entered into a particular geographical area pointing in the NE direction towards a known building).

Consider the situation where a user desires to augment a postcard with a star logo on it. A postcard may exist in many different copies in the real world, and many users may interact with the same or different copies of the same postcard. If user X augments postcard copy A and user Y augments postcard copy B, user X can see the augmentation on postcard copy B because a working object recognition system would preferably understand that postcard copy A and postcard copy B are simply copies of the same postcard design. For instance, the augmented reality client of user X would be able to retrieve the augmentation that user Y has created for postcard copy B on the basis of an identifier that identifies the postcard design. Augmentations from different users on different copies of the same postcard would be linked together to one particular postcard design due to the object recognition feature. Having some way of understanding that the postcard copies are actually the same postcard (i.e., object recognition), individual augmentations even for different copies of the postcard are easily grouped, collected, and/or maintained together.

Object recognition enables the grouping of augmentations to both postcard copy A and postcard copy B to the same postcard object within the augmented reality content management system. For the system to understand that postcard copy A and postcard copy B are merely copies of each other, an object recognition system is be implemented to recognize, from images of postcard copy A and postcard copy B, that the images captured are of the same postcard. If an image of postcard copy B was subsequently provided to object recognition after postcard copy A was added to the fingerprint database, the object recognition system may be able to identify postcard copy B as postcard copy A based on the features extracted for the fingerprint matching process.

In some embodiments, the system recognizes that one target object may be the same as the other target object by examining information such as the location, phone orientation, and sensor data. That information may be used as a filter to enable easier matching of objects (e.g., to narrow down the set of fingerprints to search in the fingerprint matching process).

In some situations, it may be desirable to not allow a particular image of an object to be recognized as the same copy of an object. For instance, it may be desirable for a user to save augmentations separately for each copy of an object because the copy of the object is tied specifically to a particular location. When relating back to the postcard example, it may be desirable that postcard copy A located in Paris, France and postcard copy B located in Amsterdam, Netherlands would have augmentations stored separately.

The user may optionally provide the location information and/or sensor information when transmitting the candidate image to system 1014, and specify that the image is tied to a particular location and/or sensor information such that the candidate image may only be recognized as a particular instance of the target object in/near a particular location. For instance, a user may tie the candidate image to the location Paris, France such that the postcard would be recognized as the postcard copy A in Paris, France, and not as the postcard copy B in Amsterdam, Netherlands. If the user did not tie the candidate image to the location Paris, then the candidate image may simply be recognized as the postcard design, and not as a copy of the postcard located in a particular place.

To enable object recognition, an object recognition system (system 1014 having feature extractor and object recognizer) maintains a database or collection of fingerprints of target objects (fingerprint database 132). A fingerprint is a set of features that substantially uniquely identifies a particular target object. Using known computer vision and image processing methods, a feature extractor applies an feature extraction algorithm to a reference image such that the fingerprint may be derived from the reference image. When a candidate image of a target object is received at system 1014, the object recognizer searches through fingerprint DB 132 to determine the particular object seen in the candidate image.

An object recognition process may begin if the user wishes to associate the augmentation with the target object, such that any later augmentations of the same object may be grouped together and linked to that particular target object, rather than the specific instance (i.e., the instance of the object as captured by digital imaging part of user device 1018).

In response to the user input or some other suitable trigger, user device 1018 transmits the candidate image (i.e., the image captured by digital image part of user device) to system 1014 for processing. In some embodiments where the location information about the target object is relevant (e.g., target object is at a fixed location, such as a building or a billboard by a motor highway), the location information of user device 1018 may also be transmitted. The candidate image and/or location information may be transmitted in a message (e.g., "image; location" arrow). Once system 1014 receives the candidate image, system 1014 processes the candidate image for features and performs a search on fingerprint database 132 using those features. If location information is also given, the location information may be used as a filter to narrow the field of search in fingerprint database 132 (if fingerprints are tagged with location information). As one skilled in the art would appreciate, other heuristics may be used to guide the fingerprint search. In some embodiments, the candidate image is cropped by the user via a graphical user interface provided by the display part of the user device using any suitable cropping graphical user interface or tool, such that the cropped image is transmitted as the candidate image. The cropping may help improve the quality of the features being extracted for fingerprint matching.

Other than cropping, the user may be provided with the opportunity to indicate the (four) corners of the target object, when the target object is, e.g., a rectangular object but the digital image of the target object shows a skewed view of the target object. It is not always possible to capture a digital image of the target object looking at the object straight-on, especially if a user is using a handheld user device. In some situations the user does not find it comfortable to hold the user device a certain way. In some situations, handheld devices are inherently imperfect due to the inability of the hand(s) in holding the user device physically still, or due to the inability to stand in a particular position to face an object straight-on. Because the image of the target object preferably shows the object as if the user is looking at the object straight-on, a correction procedure may be applied to the candidate image such that a corrected image (rather than the original digital image captured by the digital imaging device) may be used for object recognition and/or the content editor.

A illustrative correction procedure may be provided when a user has indicated that the target object is rectangular. To provide such correction procedure, a graphical user interface displaying a digital image of the target object as captured by a digital image part of the user device may be provided to the user to edit the digital image before transmitting the digital image to the object recognition system or before using the digital image for the content editor. In some embodiments, the graphical user interface enables a user to perform cropping, e.g.,

by providing/rendering for display a user interface object comprising a movable and resizable rectangle (overlaying a part of the digital image of the target object) to indicate an area of the image the user wishes to keep. For example, the user may provide user input to select and drag/move the rectangular area displayed in the graphical user interface to different part(s) of the digital image of the target object. The user may provide user input to select a corner of the rectangular area to resize the area for the cropping operation.

In some embodiments, the graphical user interface may provide an opportunity for the user to specify the location of the four corners of the target object through the user input part of the user device, such that a correction transformation may be performed to turn a skewed version of the rectangular object into a (cropped) rectangular image. In one instance, the user may provide user input to provide the location of the corners, e.g., by tapping the corners of the target object as seen though the touch-sensitive display of the user device. In some instances, the user may provide user input to move and/or relocate the corners of a four-sided user interface object overlaying a part of the digital image of the target object. For instance, a four-sided user interface object having four (movable/reconfigurable) corners may be rendered for display, overlaying the digital image. The area bounded by the four sides of the user interface object may allow the user to indicate the boundaries of the target object. For instance, the user interface object may define a trapezoidal area within the digital image of the target object, e.g., representing the boundaries of a page in a magazine. A user may provide user input to select and/or move a corner (or provide a gesture to expand or reduce the area) to reconfigure the user interface object such that the area bounded by the user interface object shows substantially only the target object.

Based on the user input, the digital image may be transformed such that a transformed, rectangular digital image of the target object may be generated from the non-rectangular area defined by the user input. For instance, a transformation matrix may be determined from the four corners indicated by the user input, and such transformation matrix may be applied to the image data bounded by the area formed by the four corners. By applying a transformation matrix onto the image data, a rectangular digital image showing substantially only the target object may be generated, even though the user may have taken a digital image at an angle and not looking at the object straight-on. This improved digital image of the target object may be used for object recognition and/or for display in the content editor.

The results of the search (e.g., "HQ features; obj id" arrow) has several possibilities. The search results returned to user device **1018** may include one match found, and an identifier of the object ("object ID") matching the target object in the candidate image is returned to user device **1018.** In some embodiments, the features package that enables tracking of the object within augmented reality view (i.e., tracking resources) is also returned. In some other embodiments, the features package is retrieved from a separate source using the object ID received in the search results. The search results returned to user device **1018** may include a plurality of matches having a plurality of object IDs and/or feature packages associated with the matches.

The search results returned to user device **1018** may include no matches. In this situation, system **1014** may add the fingerprint of the candidate image (and if applicable, the candidate image, the location information or any other metadata) to fingerprint database **132** such that the new object can be added to the collection of known fingerprints. Further processing is performed by system **1014** to extract features that enable the target object to be tracked. Features packages enabling tracking of the target object are referred to as tracking resources and may be passed on to object storage **1010.** For example, the message transmitted in "HQ features; ref image; location; obj id" arrow enables a new object to be added to object storage **1010.** As such, the new object and augmentations on that object can be managed in object storage **1010.**

In some embodiments, a reference image is also returned (arrow "HQ features; obj id") such that the reference image is displayed when the user is adding augmented reality content for target object **1016.** In general, the reference image may be of better quality than the candidate image captured by digital image part **1002,** and sometimes more suitable for augmentation.

As seen in **FIG. 1,** features packages that enable tracking may be stored in object storage **1010** such that a collection of objects and their respective tracking resources may be maintained in object storage **1010.** When a new object is detected (i.e., no match is found in the fingerprint database **132),** features packages are generated such that they may be stored as part of the tracking resources maintained in object storage **1010.** In some embodiments, object storage **1010** may be at least partially integrated with system **1014** and database used in maintaining fingerprint DB **132.** For instance, object data including fingerprints, tracking resources, reference images, location, object IDs may be maintained together in object storage **1010.** In that situation, the messaging for retrieval and query of object data shown in **FIG. 1** may be adjusted accordingly.

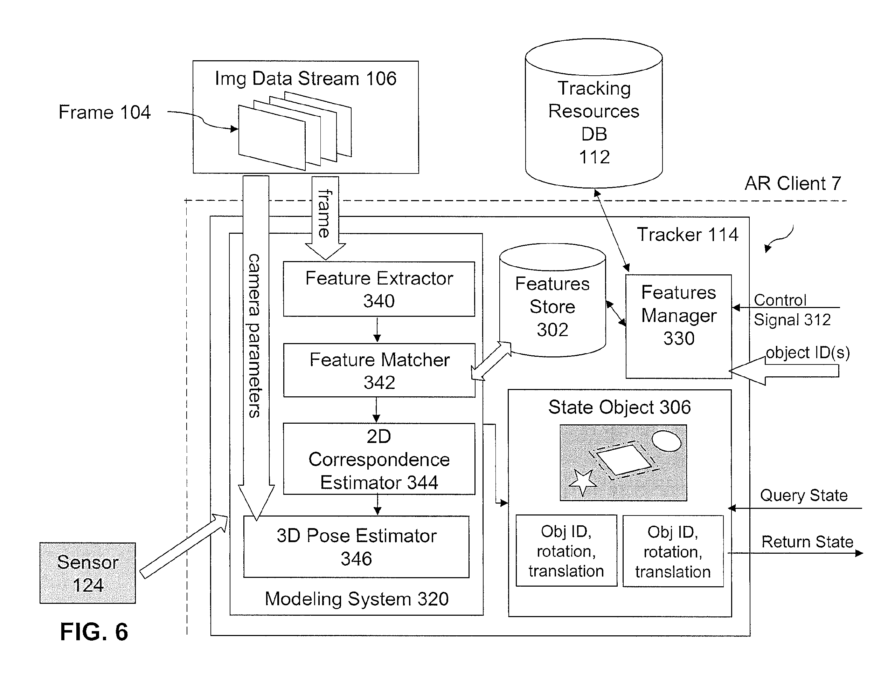

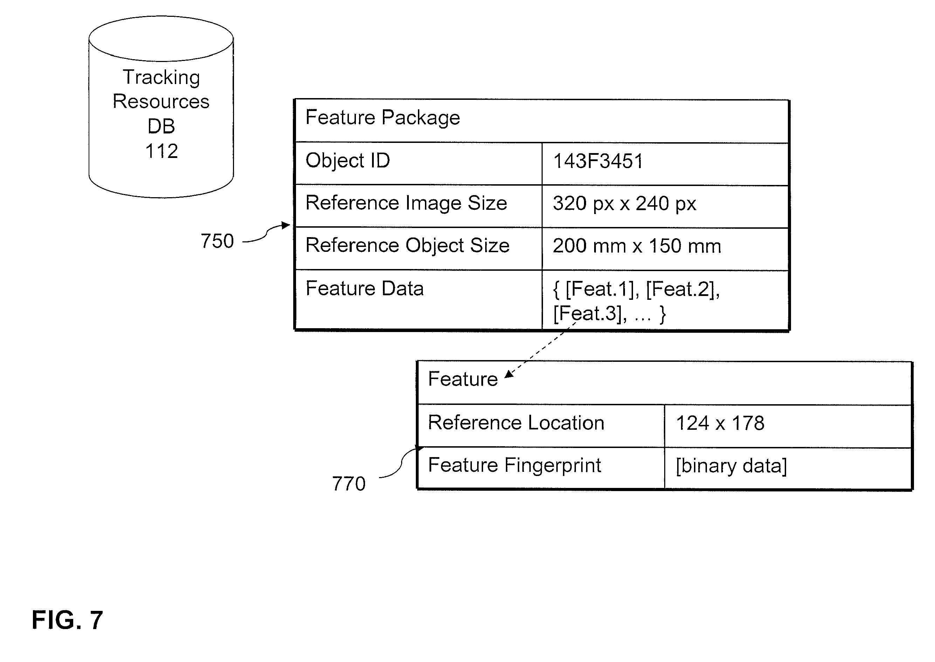

User device **1018** comprises tracker **1004,** which includes hardware or software modules that are configured to perform tracking functionality. In short, tracker **1004** estimates the pose of a target object based on tracking resources, frame(s) from the live image data stream and preferably camera parameters from digital imaging part **1002.** The pose of a real world object comprises position and orientation information of the target object. Accordingly, tracker **1004** estimates where target object **1016** is and in what direction target object **1016** is pointing. Further technical details of tracker **1004** are discussed in relation to **FIGS. 6** and **7.** The pose estimate calculated by tracker **1004** enables the augmented reality content to be transformed and displayed in perspective with the target object.

In some embodiments, the feature extraction and object recognition process may take from several seconds to a couple of minutes to perform (or may not even perform successfully at all). In that situation, user device **1018** may be waiting on the feature package to be returned and cannot proceed to display the augmented reality content in perspective with the target object in augmented reality view. To alleviate this problem, (local) tracker **1004** may be equipped with a lower quality (LQ) feature extraction module to provide LQ features that enable tracking to occur locally on user device **1018** before the higher quality (HQ) features are received from system **1014**. Local tracker **1004** may produce lower quality features because the algorithms are not as sophisticated as the algorithms implemented in system **1014**. As such, any augmentation made to target object **1016** can be displayed in perspective with the target object in augmented reality view before HQ features are received from system **1014**. This is advantageous because user device **1018** can perform tracking and produce an augmented reality view for the user in a more efficient manner, while only sacrificing the quality of the tracking temporarily until HQ features packages are received/available.

After features packages and object ID are received at user device **1018**, user device **1018** moves into editor view. Editor view comprises a graphical user interface (content editor **1006**) that enables the user to view a reference or candidate image of target object **1016** directly straight on, and add augmented reality content in a what-you-see-is-what-you-get manner. If the reference image is available on user device **1018**, then reference image is used for content editor **1006**. If only the candidate image is available (the reference image, perhaps of having better quality for augmentation, is not yet available on user device **1018**), then the candidate image as captured by digital image part **1002** may be used for content editor **1006**.

Content editor **1006** is a graphical user interface that shows an image of target object **1016** as if the user is looking straight-on at target object **1016**. This may imply that the image depicts a substantially flat surface lying substantially in parallel with the two-dimensional plane of the display part of user device **1018**. This feature provides the user experience that the user feels as if he/she is drawing and adding augmented reality content directly onto target object **1016**, and the appearance that the image displayed is stuck to the display part of user device **1018**.

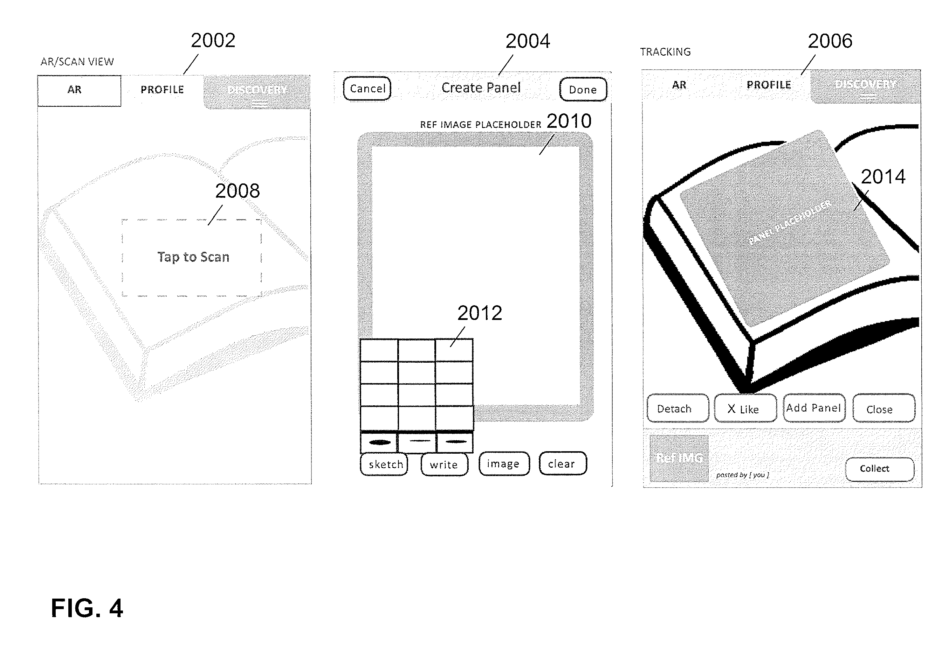

Besides showing the image of target object **1016** on the display screen, content editor **1006** provides a WYSIWYG editor. The editor may include drawing/sketching tools, text tools, stamping tools, and any other suitable content creation tools. Further details on the graphical user interface of the WYSIWYG editor is described further in relation to **FIG. 4**.

A key feature of content editor **1006** is to enable the user to create augmented reality content **1040** directly onto an image of target object **1016**. The user input representing the user generated augmented reality content in the two-dimensional space of the user input part (e.g., x, y coordinates on the touch-sensitive display screen) is mapped spatially directly onto the two-dimensional image of target object **1016**. In this situation, the target object being drawn on no longer moves (e.g., when the user is holding the user device with his/her hand, when the user is pressing on the touch-sensitive screen, etc.). The reference image is stuck and remains stationary on screen, thereby helping prevent jitter introduced by the motion of the user device or the target object. In other words, by drawing on the two-dimensional space, the user no longer has to draw into the three-dimensional space, thereby preventing the issues of jitter and inaccuracy caused by the projection process. The creation of augmented reality content no longer occurs where the x, y coordinates of the user input is required to be translated from two-dimensional space into the coordinates of the three-dimensional virtual augmented reality space. Note that even if the content editor **1006** is maintained as a three-dimensional object within the software environment of the augmented reality client, the feature of having the image displayed substantially in parallel to the two-dimensional plane of the user input part still obviates the need to translate/project the two-dimensional user input into three-dimensional virtual space. Visually, the user input representing the augmented reality content still directly corresponds to the image in two-dimensional space.

A user provides user input representative of the augmented reality content **1040** that he/she wishes to add onto target object **1016**. The user input is received by content editor **1006** of augmented reality client on user device **1018**, and is used to generate data that makes the augmented reality content suitable for displaying in augmented reality view. In one embodiment, augmented reality content **1040** is stored as a scalable vector graphic (SVG) file, Adobe Illustrator (AI), Postscript (PS), or any other suitable format for storing two-dimensional vector based graphics. In some embodiments, the graphics may be stored as rasterized image files having formats such as Portable Network Graphics (PNG), Joint Photographic Experts Group (JPEG), Bitmap Image File (BMP), etc. Using the object ID as an identifier, augmented reality content can be transmitted, added and stored in association with the target object at object storage **1011** (e.g., "obj id; augmentation" arrow). Once added to object storage **1011**, user device **1018** may retrieve the same augmentation to be displayed in content editor (viewing) view and/or augmented reality view. If desired, a user may even browse through various augmentations for a particular target object through a browser implemented on the augmented reality client of user device **1018**.

User input data provided through user input part of user device **1018** preferably has a direct two-dimensional spatial relationship with the image of the target object displayed in the WYSIWYG editor. For instance, the user input provided in the right-lower quadrant of the coordinate system of the user input part corresponds to the right-lower quadrant of the image displayed in the editor. The substantially one-to-one spatial correspondence provides the user experience where a user feels as if he/she is adding content directly onto the image as if he/she is drawing on a piece of paper with a pen. The spatial relationship is preferably captured by content editor **1006** and maintained even when the augmented reality content is transformed to be displayed in perspective with the target object in augmented reality view **1008.** In effect, the WYSIWYG property of the content editor is brought into the augmented reality view.

One way to do capture the spatial relationship is to maintain a coordinate system in the content editor **1006** for the user input events from user input part, wherein the coordinate system has a direct correspondence to the image of the target object being displayed on content editor **1006.** For example, if the user generated augmented reality content is placed in the middle of the postcard, the augmented reality content is preferably placed in the center (not in the corner of, for example) of the postcard even when the augmented reality content is displayed in perspective with the postcard. Accordingly, the spatial relationship may be used when the augmented reality content is transformed and rendered in augmented reality view.

Once the user has finished creating augmented reality content **1040** in content editor **1006,** the augmented reality content **1040** may then be displayed in perspective with the target object **1016** in augmented reality view **1008.** To do so, augmented reality content **1040** (e.g., an SVG file) may be scaled, rotated and/or translated such that when content **1040** is rendered and displayed on user device **1018** in augmented reality view, content **1040** is displayed in perspective with target object **1016.** Visually to the user, augmented reality content **1040** appears to be stuck to target object **1016.** Tracker **1004** on user device **1018,** using LQ or HQ features packages, the image stream from digital input part **1002** and optionally parameters from digital input part **1002,** perform tracking of the target object to estimate the pose of that object. For instance, the tracking features enable tracker **1004** to perform a search for the object within the image frames from live image data stream captured by digital image part **1002.**

At a given moment, tracker **1004** maintains a state of the target object(s), wherein the state maintains information such as the current pose(s) of the target object(s) being tracked by tracker **1004.** Based on the pose estimation information, a transformation of the augmented reality content may be performed by a graphics engine on the basis of the position and orientation information of the pose information. For example, the transformation may be performed through matrix manipulations on the data of augmented reality content **1040,** wherein the matrix manipulations are based on the estimated pose information.

In some embodiments, to maintain the WYSIWYG nature of content editor **1006,** the spatial relationship captured from content editor **1006** between the augmented reality and the image of target object **1016** may also be used in addition to the pose estimate of target object **1016** when augmented reality content **1040** is rendered and displayed in augmented reality view **1008.** Consider the scenario where the user draws a happy face onto an image of the postcard in content editor **1006,** the end result in augmented reality view **1008** enables the user to view augmented reality content **1040** as if the user had (virtually) drawn a happy face onto the image of the postcard using a marker, and the happy face appears (virtually) drawn on the postcard even when the user moves about the surroundings and looks at the postcard from various angles.

In some embodiments, the user may provide user input to "detach" augmented reality content **1040** and move back to content editor **1006** to view or edit augmented reality content **1040.** For example, the user may move back to content editor **1006** to move augmented reality content **1040** to a different place on target object **1016** (e.g., by selecting the content and dragging the content to the desired position), thereby updating the spatial relationship between the target object and the augmented reality content. The user may change colors, add other content such as text, and so on. In a similar fashion, the new augmented reality content may be captured (as before) by content editor **1006,** transmitted to object storage **1010,** and displayed in perspective in augmented reality view **1008.**

Also shown in **FIG. 1** is an exemplary illustration of the data structure of information associated with a particular target object. Example information associated with a particular target object includes: object id, reference image, location, associated augmentations, metadata. The object ID enables the indexing and substantially unique identification of target objects stored in object storage **1010.** Various copies of the target object (see postcard example discussed above) is preferably associated with the same object ID. In this manner, augmentations of the same postcard design, even though the augmentation may have been done on top of different copies of the postcard, the augmentations can be linked and viewed by others as the augmentations associated with the same postcard design. The reference image associated with a particular object enables one standard image to be used for a particular target object. The reference image is preferably used when the target object is displayed for editing in content editor **1006.** When available and/or desired, the location (or any suitable geographical information) may also be stored for a particular target object. The location information may aid in exploration and discovery of target objects, such as using the location information to provide augmented reality content near the surroundings of user device **1018.** Associated augmentation(s) comprises augmented reality content generated by users. The associations may be stored as pointers to the resource (e.g. file) that provides the particular augmented reality content. In some embodiments, the augmented reality content may themselves each have associated metadata about the augmented reality content (e.g., identity of the user who created it, time of creation, time of last update, location of creation, number of "likes", identity of users who "like" the augmentation, etc.). Lastly, a target object may also have metadata of its own. Examples of metadata includes: the identity of the user who created the object, time of creation, time of last update, flags, semantic tags for the object, category that the target object belongs to, other suitable geographical information, access control, etc. The example data structure enables object storage **1010** to maintain a collection of augmented reality content (and other suitable data) associated with target objects in an organized manner.

While the discussion related to **FIG. 1** focuses on the creation and uploading of augmented reality content to the system, the following figure describes the process of retrieving augmented reality content for a target object.

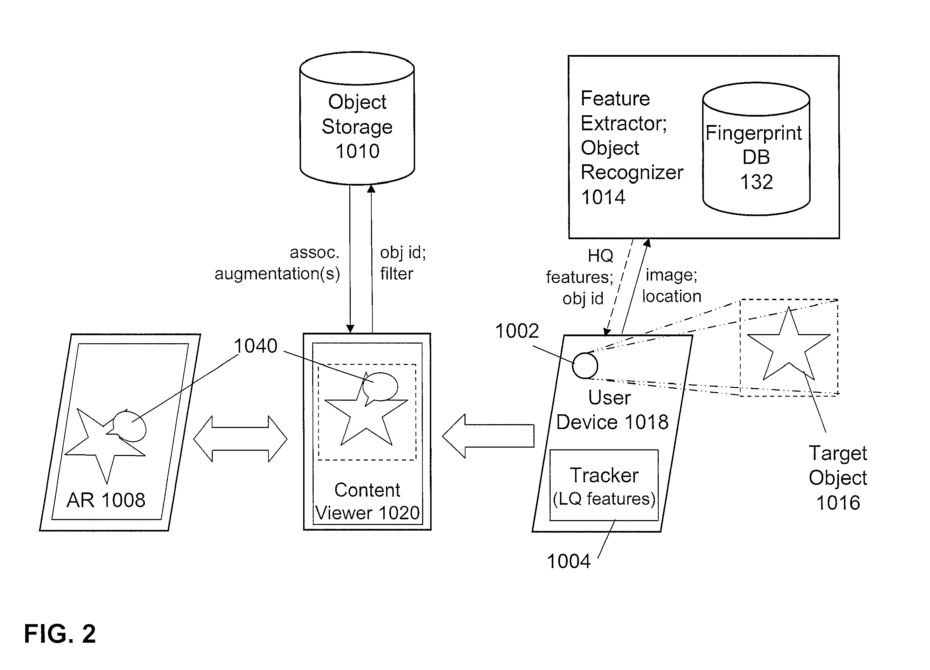

**FIG. 2** shows an illustrative system for retrieving augmented reality content according to one embodiment of the disclosure. In this embodiment, target object **1016** appears in the view of digital imaging part **1002** of user device **1018.** The user provides a user input (or the device detects a suitable trigger) to "scan" the object. An image frame is captured from the live image data stream from digital imaging part **1002** and the image, and if applicable, the location information, is provided to system **1014** for object recognition ("image; location" arrow). System **1014** processes the received image for features, and searches fingerprint database **132** using the features (and if applicable, location information) for matches. If a match is found, system **1014** may return a feature package and the object ID of the match, and if preferred, the reference image associated with the object ID ("HQ features; obj id" arrow). In some embodiments, the LQ features of tracker **1004** may be used temporarily for any necessary tracking functionality when HQ features are not yet available on user device **1018.**

In one embodiment, the user may be in a browsing mode whereby augmented reality content is viewed out of perspective with the target object (e.g., content viewer **1020).** For example, a browser may provide a list of composed images of the augmented reality content on top of the reference image (e.g., in a film strip, mosaic). To generate the browsing view, user device **1018** sends the object ID and any suitable search filters to object storage **1010** to retrieve the associated information about the particular target object. For instance, a plurality of associated augmented reality content or pointers to the augmented reality content may be retrieved from object storage **1010** ("assoc. augmentations(s)" arrow). Similarly, other information about the object such as tags, flags, metadata, description and such may also be retrieved for display in content viewer **1020.**

The retrieved associated augmentations may be in SVG format, and the augmentations is displayed to the user through display part of user device **1018.** The reference image (or simply the image captured using the digital imaging part) and the augmented reality content lie substantially parallel to the two-dimensional plane of the display part of user device **1018** for easier viewing. Alternatively or additionally, the augmented reality content is displayed to the user in perspective with the target object in augmented reality view **1008.** User device **1018** may provide the user with the option to switch between content viewer **1020,** content editor **1006** (seen in **FIG. 1**) and augmented reality view **1008.** The advantage of being able to "detach" from the real object in augmented reality view such that augmented reality content may be edited and appreciated out of perspective is preserved. As such, the user may view and edit augmented reality content straight-on with ease, while still having the option to "attach" the augmented reality content back to the target object in augmented reality view.

In some embodiments, the augmented reality content may include more than just a two-dimensional vector graphic. The augmented reality content may also include configuration for user interactivity. In that situation, the problem of having to translate two-dimensional user input data (representing user interactivity) into the three-dimensional virtual space is present. In other words, the user interaction with an interactive augmented reality content in augmented reality view **1008** may be unnatural and inaccurate. As such, content viewer **1020,** having the augmented reality content displayed out of perspective and stuck to the display part of user device **1018** alleviates this problem by allowing the user to interact with the interactive augmented reality content more directly in two-dimensional space. Content viewer **1020,** by displaying the interactive augmented reality content substantially in parallel with the user input part and display part (e.g., touch-sensitive display screen), the user input events in two-dimensional space can be mapped directly to a two-dimensional interactive augmented reality content without requiring translation/projection of the two-dimensional input into three-dimensional virtual space. For example, augmented reality content may include a widget for playing a video in response to a user pressing on a button in the augmented reality content. However, the user may find it unnatural or not easy to press on a button stuck to a target object in augmented reality view, if the user input on a touch-sensitive screen is not translated properly into the three-dimensional virtual space. As such, the user may provide user input to "detach" the augmented reality content from the target object such that the content can be viewed in content viewer **1020.**

In certain embodiments, associated augmentations may be retrieved automatically without explicit user input if the user had chosen to "follow" a particular target object. As such, an augmented reality content feed may be configured such that desired augmented reality content for the particular target object may be fetched from object storage **1010** like a news feed.

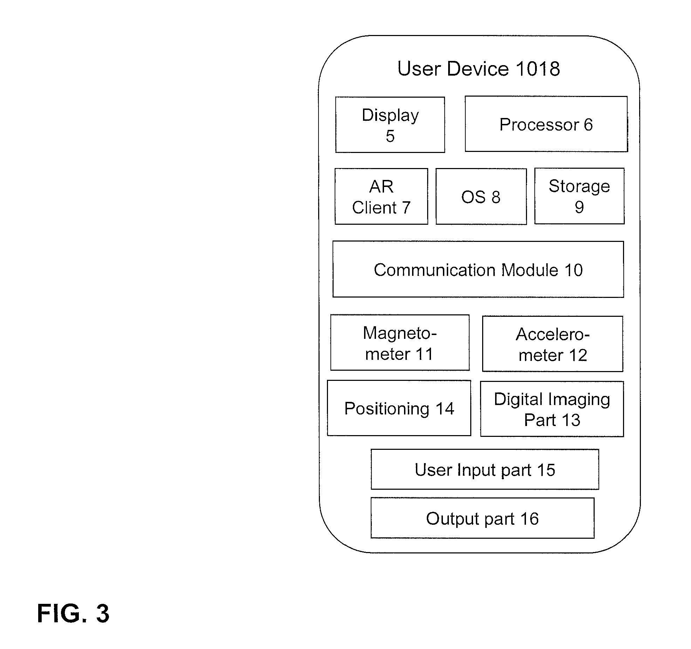

FIG. 3 shows an illustrative user device according to one embodiment of the disclosure. Exemplary user device **1018** includes display part **5,** processor **6,** augmented reality (AR) client **7,** operating system **8,** storage **9,** communication module **10,** magnetometer **11,** accelerometer **12,** positioning **14,** digital imaging part **13,** user input part **15,** and output part **16.**

User device **1018** has display part **5,** preferably a capacitive touch-sensitive display screen having a substantially flat surface allowing the user to view content in a two-dimensional plane. Naturally, other types of touch screens may also be used. Display **5** may also be projection based (e.g., projection glasses). Display **5** may be a suitable output device for presentation of information in visual form. When the input information is supplied as an electrical signal, the display is called an electronic display. Common examples for electronic visual displays are televisions, computer monitors, screens on a mobile device, etc. In some embodiments, a display for a spatial augmented reality system may be a projection of visual information onto real world objects. In some other embodiments, a display for a head-mounted augmented reality system may be optically projected into the eyes of a user through a virtual retinal display. Display **5** may be combined with user input part **15** to provide a touch-sensitive display.

User device **1014** has a processor enabling the computations required to support the methods and systems described herein. Processor **6** may be a semiconductor device configured to perform computations required for carrying the functions of user device **1018.** For example, processor **6** includes a computer processing unit or a microprocessor. In some embodiments, processor **6** includes a graphics processing unit specialized for rendering and generating computer-generated graphics. Preferably, processor **6** is configured to communicate, e.g., via a communication bus, with other components of user device **1018.** In this manner, the processor may execute processes using data from other components of user device **1018.**

An implementation of AR client **7** may be a software package installed or configured to run on user device **1018.** The implementation of AR client **7** is preferably a computer program product, stored in non-transitory storage medium, when executed on processor **6,** is configured to provide an augmented reality experience to the user. For instance, the implementation of AR client provides a camera view where a user may view the real world through display **5,** whereby processor **6** combines an optically acquired image from digital imaging component **13** and computer generated graphics from processor **6** to generate the augmented reality camera view.

OS **8** enables AR client **7** to communicate with other parts of user device **1018** such as access to memory in storage **9).** User device may use communication module **10** to communicate with system **1014,** object storage **1010,** or any necessary content providers for providing augmented reality content. Operating system **8** may be configured to manage processes running on processor **6,** as well as facilitate various data coming to and from various components of user device **1018.** Memory **9** may be any physical, non-transitory storage medium configured to store data for user device **1018.** For example, memory **9** may store program code and/or values that are accessible by operating system **8** running on processor **6.** Images captured by digital imaging component **13** may be stored in memory **9** as an camera buffer. The state of a tracker (e.g., tracker **114)** running as part of AR client **7** may be stored in memory **9,** and may be accessible by AR client **7.**

Magnetometer **11,** accelerometer **12,** positioning **14** offer sensor data regarding the physical state of user device **1018** and the environment surrounding user device **1018.** Magnetometer **11** (also referred to as magneto-resistive compass or electronic/digital compass) may be a electronic device configured to measure the magnetic field of the Earth, such that a compass reading may be determined. For instance, a mobile phone as user device **1018** may include a built in digital compass for determining the compass heading of user device **1018.** In certain embodiments, the orientation of the user or user device **1018** may be determined in part based on the compass reading. In some embodiments, user device **1018** may include a (e.g., 3-axis) gyroscope, not shown in **FIG. 3,** to measure tilt in addition to direction heading. Other sensors, not shown in **FIG. 3,** may include proximity and light sensors.

User device **1018** may include accelerometer **12** to enable an estimate movement or displacement of user device **1018.** For instance, accelerometer **12** may assist in measuring the distance travelled by user device **1018.** Accelerometer **12** may be used as means of user input, such as means for detecting a shaking or toss motion applied to user device **1018.** Accelerometer **12** may also be used to determine the orientation of user device **1018,** such as whether it is being held in portrait mode or landscape mode (i.e., for an elongated device). Data from accelerometer **12** may be provided to AR client **7** such that the graphical user interface(s) displayed may be configured according to accelerometer readings. For instance, a graphical user interface (e.g., such as the layout of the graphical user interface) may be generated differently depending on whether the user is holding a mobile phone (i.e., AR device) in portrait mode or landscape mode. In another instance, a graphical user interface may be dynamically generated based at least in part on the tilt measured by the accelerometer (i.e., for determining device orientation), such that three-dimensional graphics may be rendered differently based on the tilt readings (e.g., for a motion sensitive augmented reality game). In some cases, tilt readings may be determined based on data from at least one of: accelerometer **12** and a gyroscope.

User device **1018** may include positioning device **14** configured to estimate the physical position of user device **1018** within a reference system. For instance, positioning device **14** may be part of a global positioning system, configured to provide an estimate of the longitude and latitude reading of user device **1018.**

Digital imaging part **13** captures images of the real world and provides an live image data streamto which AR client **7** has access. AR client **7** running on user device **1018** is configured to generate an augmented reality view (or camera view) by displaying a graphical overlay in display part **5** over the live image data streamfeed from digital imaging part **13.** The graphical overlay is generated from the augmented reality content. The generation of graphical overlay may be performed by an AR engine in AR client **7,** using state data from a tracker in AR client **7.**

A user may then utilize user input part **15** to interact with graphical user interfaces provided by user device **1018.** User input part **15** may include a keypad, touch screen, microphone, mouse, keyboard, tactile glove, motion sensor or motion sensitive camera, light-sensitive device, camera, or any suitable user input devices. In some embodiments, digital imaging device **13** may be used as part of user input part **15** based on computer vision (e.g., capabilities to detect hand gestures). Output part **16** may include other output such as audio output, haptic output (e.g., vibration), or any other suitable sensory output.

FIG. 4 shows illustrative wireframes of the user interaction with an illustrative augmented reality system according to one embodiment of the disclosure. A user is provided with augmented reality/scan view in screen **2002,** content editor view in screen **2004,** and then to augmented reality view in screen **2006.** First, while in augmented reality view seen in (screen **2002),** user device **1018** provides an interface for "scanning" a particular object to augment. In this embodiment, region and visual marker **2008** is provided on the screen to allow user to tap to "scan".

In one embodiment, the image is provided to system **1014** for object recognition and an indicator is provided on screen to the user that the image is being processed. After a moment, user device **1018** receives an object ID, features package for tracking the object, and/or a reference image, and the AR client brings the user to the content editor. In another embodiment, user device **1018** does not wait for the object ID or features package to be retrieved, and rather, uses tracker **1004** of user device **1018** to produce lower quality features to enable tracking for the time being.

In either cases, the user is brought to content editor view and is provided with tool(s) for creating augmented reality content on top of the target object. If available, a reference image is shown in area **2020** and the user may create content directly on top of the reference image. If the reference image is not yet available, content editor may display the image captured by display part of user device **1018** instead.

Content editor seen in screen **2004,** being a WYSIWYG editor, enables a user to create and place augmented reality content directly on top of the image of the target object. WYSIWYG is used in computing to describe a system in which content (text and graphics) displayed onscreen during editing appears in a form exactly corresponding to its appearance when displayed. In this case, the WYSIWYG editor goes even further to enables the user to add augmented reality content to the target object in the content editor and the content is later displayed appearing in a form exactly corresponding to its appearance when displayed in three-dimensional augmented reality view. Furthermore, instead of having a user add content within the three-dimensional virtual space of augmented reality, the use of the two-dimensional content editor provides easier and more natural user experience with the creation of content. This advantage is achieved when the content authored through the content editor is subsequently transformed to be displayed in perspective with the target object in a WYSIWYG manner.

Exemplary content creation tools include a text tool for adding characters to the image, a sketch/drawing tool with varying stroke thickness, options to choose font properties for the text, stamps or other visual objects that may be added to the image, selection/moving tool to adjust the positioning of the content on the image.

The content editor of screen **2004** receives user input events from the user input part of user device **1018.** Because we may not always know the physical size of the reference images (e.g., a photo of a postcard or a photo of a building facade may have similar dimensions), the mapping of user input coordinates to the real image coordinates may be done using relative offsets. As such, the user input associated with the augmented reality content (e.g. input events for drawing on screen), may be processed and/or stored using relative offsets with the reference image. As such, the WYSIWYG spatial relationship between the user input and the reference image may be appropriately recorded.

In one embodiment, for the creating the graphic suitable for storage, the screen coordinates may be used initially (e.g. if the screen is 800x480 pixels, initial canvas has those dimensions). Because the size of the reference image in screen coordinates is known, the user input is easily matched up with the user input. The center of the augmentation is lined up with the center of the reference image. The width and height of the augmentation are represented as percentage of the width and height of the reference image. This percentage can be more than 100% if the augmentation is bigger than the reference image. In some cases, an offset and rotation to the placement of the augmentation may be automatically added if the center of the augment does not match the center of the image. Alternatively or additionally, the user may provide user input to add the offset or rotation to the placement of the augmentation if the placement is not what the user had initially desired.

Once the user is done with the authoring of augmented reality content, the augmented reality content may be processed and uploaded to a remote server such as object storage **1010** for storage. A user may be brought back to the augmented reality view to see the augmented reality content **2014** stuck to the target object. Alternatively, a user may preview the augmented reality content locally by moving into augmented reality view to see the augmented reality content **2014** first, decides whether to continue editing (if not, select "detach" and return to content editor view), and then finally chooses to finalize and upload the augmented reality content to object storage **1010** for storage.

Once the user is finished with the particular augmented reality content, the content is saved preferably in a vector graphics form to facilitate the transformation of the content to the three-dimensional space of augmented reality. In augmented reality view as seen in screen **2006,** the AR client queries the state of the tracker to retrieve the pose estimation of the target object (i.e., the book as seen in this case). Given the pose estimation, the AR engine of the AR client then applies a transformation on the vector graphic of the augmented reality content based on the pose estimation. The transformed vector graphic is then rendered to be placed with the target object in the augmented reality view, preferably using the spatial relationship of the content with the image of the target object as captured by the WYSIWYG content editor.

One of the ways to render the three-dimensional transformed vector graphic (object) into the augmented reality view is to specify two types of matrices: 1) a modelview matrix and 2) a projection matrix. The modelview matrix contains information about the rotation and translation of the camera relative to the object (transformation parameters obtained from the state of the tracker). On the other hand, because the three-dimensional virtual world is displayed in a two-dimensional display, the projection matrix specifies the projection of three-dimensional world coordinates to two-dimensional image coordinates. Both matrices may be specified as homogeneous 4x4 matrices, for instance, the same is used by the rendering framework based on the OpenGL framework.

The projection matrix is calibrated initially to match the camera (digital imaging part) in the device by using the focal length of the lens and the resolution of the camera sensor as input. The data from the camera may similarly be used for pose estimation in the tracker. The modelview matrix is updated in every frame to match the position of the augmentation with the position of the target object. The estimation on the position is updated by the tracker.

In one embodiment, this computation is a two-step process, utilizing in part the tracker described in relation to **FIG. 6.** First, the two-dimensional position of the target object is determined in the current image by matching the reference features with the image features (e.g., in 2D correspondence estimator **344** in the tracker). The two-dimensional positions of the target object corners in the current image are mapped to the three-dimensional positions of the target object in three-dimensional space by a projection function as follows:

$$x = P * H * X$$

where X is a 4-dimensional vector representing the 3-dimensional object position vector in homogeneous coordinates (e.g., in 3D Pose Estimator **346** in the tracker). H is the 4x4 homogeneous transformation matrix, P is the 3x4 homogeneous camera projection matrix, and x is a 3-dimensional vector representing the 2-dimensional image position vector in homogenous coordinates.

The transformation matrix H represents the three rotation parameters, translation parameters by six degrees of freedom. The transformation matrix H, once generated, may be used to transform the augmented reality content such that the content can be displayed in perspective with the target object. These parameters may be estimated by a non-linear optimization procedure (Levenberg-Marquardt algorithm).

After this step, the matrix H can be used in the rendering routines for the augmented reality content, such that the augmented reality content can be rendered and displayed in the display of the user device in perspective with the target object.

To summarize, feature extractor of **FIG. 6** generates image features (fingerprints) on the basis of an image frame. Feature matcher of **FIG. 6** matches the image features with reference features. 2D correspondence estimator of **FIG. 6** receives the matched image features (if the feature matcher has found a match) and estimates (the positions of) the boundaries of the target object in the image frame on the basis of the matched image features. 3D pose estimator of **FIG. 6** determines the modelview matrix H comprising the transition and rotation information needed to display content in perspetive with the object ("AR view"). 3D pose estimator of **FIG. 6** determines H using the relation x=P*H*X, wherein P is determined on the basis of the camera parameters and wherein H is estimated on the basis of the 2D positions (determined by the 2D correspondance estimator) and P using a non-linear optimization prodecure. H is used to render and display the augmented reality content in augmented reality view.

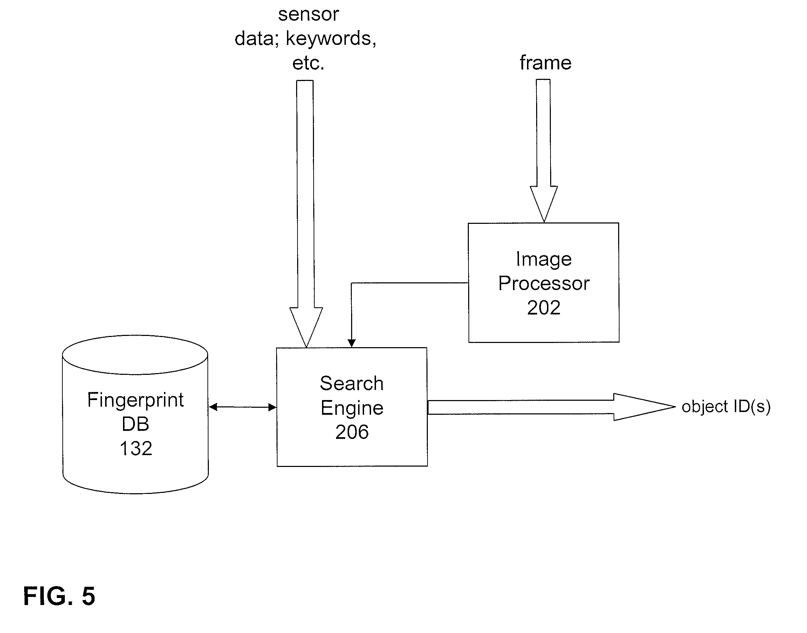

**FIG. 5** shows an illustrative system for enabling object recognition according to one embodiment of the disclosure. Object recognition processes determines whether an incoming candidate frame contains a recognizable object. In some embodiments, digital imaging part **13** optically acquires an image frame. The image frame may be stored in memory **9** of user device **1018.**

The image frame may be a photograph of a scene. For instance, the image frame may be a photograph of a building, poster, car, person, shoe, artificial marker, etc. The incoming candidate frame is provided to image processor **202.** Image processor **202** processes the incoming candidate frame to create data that can be easily used in search engine **206** (feature extraction). In some embodiments, more than one image (such as a plurality of successive images) may be used as candidate image frames for purposes of object recognition.

Depending on how fingerprints in fingerprint database **132** has been generated, algorithms in image processor **202** may differ from one variant to another. Image processor **202** may apply an appearance/based method, such as edge detection, colour matching, etc. Image processor **202** may apply feature-based methods, such as scale-invariant feature transforms, etc. After the incoming candidate frame has been processed, it is used by search engine **206** to determine whether the processed frame matches well with any of the fingerprints in fingerprint database **132.** Optionally, sensor data and keywords may be used as a heuristic to narrow the search for matching fingerprints. For instance, user device **1018** may provide a keyword based on a known context. In one illustrative example, user device **1018** may provide a word "real estate" to allow the search engine to focus its search on "real estate" fingerprints. In another illustrative example, user device **1018** may provide the geographical location (e.g., longitude/latitude reading) to search engine to only search for fingerprints associated with a particular geographical area. In yet another illustrative example, user device **1018** may provide identification of a particular content provider, such as the company name/ID of the particular content provider, so that only those fingerprints associated with the content provider is searched and returned.

The search algorithm used may include a score function, which allows search engine **206** to measure how well the processed frame matches a given fingerprint. The score function may include an error or distance function, allowing the search algorithm to determine how closely the processed frame matches a given fingerprint. Search engine **206,** based on the results of the search algorithm, may return zero, one, or more than one search results. The search results may be a set of object ID(s), or any suitable identification data that identifies the object in the candidate frame.

Preferably, the search algorithm can find a recognizable object even though the object may appear obscured in the incoming candidate image frame, and/or can withstand a certain amount of lighting issues or noise in the incoming candidate image frame.

If no matches are found, the search engine may transmit a message to user device **1018** to indicate that no match has been found, and optionally provide object IDs that may be related to keywords or sensor data that was provided to system **1014.** In some embodiments, user device **1018** may provide an opportunity to "tag" the incoming image frame such that system **1014** may "learn" a new object. The user may be prompted to provide more information about the object such that a proper augmented reality content, a reference image and the associated augmentation(s) can be created (as well as associated fingerprint and tracking resource). For instance, the user may be directed to a website for adding metadata for that image of the target object to create a entry in the fingerprints database **132** for the unknown object. An active learning system **1014** may facilitates the process of adding new target objects and their associated user generated content to the augmented reality service provision system. The metadata/information added for the target object may assist in the discoverability of the target objects (e.g., in a filter, search, etc.).

Object recognition is a relatively time and resource consuming process, especially when the size of searchable fingerprints in fingerprint database grows. Preferably, system **1014** is executed upon a specific request from user device **1018.** For instance, the incoming candidate image frame is only transmitted to system **1014** upon a user indicating that he/she would like to have an object recognized by the system. Alternatively, other triggers such as a location trigger may initiate the object recognition process. Depending on the speed of system **1014,** it is understood that the object recognition may occur "live" or "real time". For example, a stream of incoming image candidate frames may be provided to system **1014** when an AR client is in "object recognition mode". A user may be moving about with the user device to discover whether there are any recognizable objects surrounding the user. In some embodiments, the visual search for a particular object (involving image processing) may even be eliminated if the location is used to identify which objects may be in the vicinity of the user. In other words, object recognition merely involves searching for objects having a location near the user, and returning the tracking resources associated with those objects to user device **1018.**

Rather than implementing object recognition algorithms locally on the user device, object recognition may be performed in part remotely by a vendor or remote server. By performing object recognition remotely, AR device can save on resources needed to implement a large scale object recognition system. This platform feature is particularly advantageous when the processing and storage power is limited on small mobile devices. Furthermore, this platform feature enables a small AR device to access a large amount of recognizable objects.

**FIG. 6** shows an illustrative tracking system for determining the state of the scene in augmented reality, according to one embodiment of the disclosure. Once user device **1018** has object ID(s) from system **1014,** user device **1018** may fetch other information to enable tracking of the recognized object(s). In some variants, user device **1018** is provided with tracking resources from tracking resources database **112,** object storage **1010** or system **1014** (depending on where the tracking resources are stored). The tracking resources retrieved may be stored by features manager **330** to features store **302.** An exemplary tracking resources may include a feature package for a particular object. Details of an exemplary feature package is further explained in relation to **FIG. 7.**

In other variants, tracker **114** of AR client **7** of user device **1018** fetches tracking resources corresponding to the input object ID(s) from tracking resources database **112,** object storage **1010** or system **1014,** in response to control signal **312** (a signal from AR client **7** to initiate the tracking procedure). For instance, AR engine **116** transmits control signal **312** to tracker **114** to initiate the tracking process. AR engine **116** may forward object ID(s) from system **1014** to tracker **114.** In some embodiments, control signal **312** may request features manager **330** to clear or flush features store **302.** The control signal **312** may request features manager **330** to begin or stop tracking.

Preferably, tracker **114** runs "real time" or "live" such that a user using the augmented reality system has the experience that the computer-generated graphics would continue to be displayed in perspective with the target object as the user is moving about the augmented reality environment and the real world. Accordingly, tracker **114** is provided with successive image frames for processing (such as frame **104** and frames thereafter) from live image data stream**106.** In some embodiments, camera parameters are also provided to tracker **114.**

Tracker **114** preferably includes features manager **330,** features store **302,** modeling system **320** and state object **306.** Modeling system **320,** configured to estimate three-dimensional pose of a real-world object of interest (i.e., the real world object corresponding to an object ID, as recognized by system **1014)** within the augmented reality environment. The augmented reality environment may include a coordinate system for describing three-dimensional space of the augmented reality environment. The three-dimensional space corresponds or correlates substantially to both the real world as well as the virtual world. Augmented reality combines both the real world with the virtual world, where the virtual world comprises objects that are semantically related to objects in the real world. By estimating the three-dimensional pose of the real-world, virtual world objects may be placed in perspective with the real world object seen through the camera view.

Based on incoming object ID(s), features manager **330** may query tracking resources database **112** or object storage **1010** to retrieve tracking resources corresponding to the input object ID(s). Tracking resources may include a features package. The features package enables modeling system **320** to determine the presence of the recognized object.

Live image data stream **106** provides frame 104 to modeling system **320** for processing, such that the three-dimensional pose may be estimated. Camera parameters may be provided to modeling system **320** to facilitate pose estimation. Although this embodiment shown uses camera parameters to facilitate pose estimation, some other variants of the tracker **114** may not require the use of camera parameters. In this disclosure, pose corresponds to the combination of position/translation and orientation of an object. The camera frame serves as an input to feature extractor **340.** Feature extractor **340** may extract candidate features from the current frame data. For example, feature extractor **340** may apply feature extraction algorithms such as: FAST (Features from Accelerated Segment Test), HIP (Histogrammed Intensity Patches), SIFT (Scale-invariant feature transform), SURF (Speeded Up Robust Feature), BRIEF (Binary Robust Independent Elementary Features), etc.

The candidate features are then provided to feature matcher **342** with reference features from feature package(s) in features store **302.** A matching algorithm is performed to compare candidate features with reference features. If a successful match has been found, the reference and candidate features are then provided to two-dimensional correspondence estimator **344.** Two-dimensional correspondence estimator **344** estimates at least one two-dimensional transformations(s) between the reference features and candidate features. In some embodiments, if there are more than one object being tracked in the scene, then two-dimensional correspondence estimator **344** may produce more than one two-dimensional transformations, one transformation corresponding to each object being tracked.

Understandably, tracking an object of the scene is relatively computationally intensive, heuristics may be used to decrease the amount of resources to locate an object in the augmented reality environment. In some embodiments, sensor data from sensor **124** (e.g., magnetometer **11,** accelerometer 12, positioning **14,** user input part **15)** may reduce the amount of processing in tracker **114** by reducing the size of the image to be searched in feature matcher **324.** For instance, if the object was found at a particular position of frame **104,** feature matcher **342** may begin searching around the particular position for the next frame. In one embodiment, instead of looking at particular positions of the image first, the image to be searched is examined in multiple scales (e.g. original scale & once downsampled by factor of 2, and so on). Preferably, the algorithm may choose to first look at the scale that yielded the result in the last frame.

Interpolation may also be used to facilitate tracking, using sensor data from sensor **124.** For example, if sensor **124** detects/estimates that AR device has moved a particular distance between frames, the three-dimensional pose of the target object may be interpolated without having to perform feature matching. In some situations, interpolation may be used as a way to compensate for failed feature matching frames such that a secondary search for the target object may be performed (i.e., as a backup strategy).

AR client 7, may transmit control signal **312** to tracker **114** to initiate tracking in response to user input from as UI 126, such as a button press or a voice command, certain sensor data, etc. For instance, sensor data providing the geographical location of the user device 1014 (such as entering/leaving a particular geographical region) may trigger control signal 312. The logic for triggering of the transmission of control signal 312 may be based on at least one of: image frames, audio signal, sensor data, user input, internal state of AR client7, or any other suitable signals.

In one instance, the triggering of object recognition (and subsequently triggering tracking) may be based on user input. For instance, a user using AR client 7 may be operating in camera mode. The user may point the camera of the device, such as a mobile phone, towards an object that he/she is interested in. A button may be provided to the user on the touch-sensitive display of the device, and a user may press the button to snap a picture of the object of interest. The user may also circle or put a frame around the object using the touch-sensitive display to indicate an interest in the object seen through the camera view. Based on these various user inputs, control signal 312 may be transmitted to tracker 114 such that tracking may begin. Conversely, a user may also explicitly provide user input to stop tracking, such as pressing a button to "clear screen" or "stop tracking", for example. Alternatively, user input from user input part 15 to perform other actions with AR client 7 may also indirectly trigger control signal 312 to be sent. For instance, a user may "check-in" to a particular establishment such as a theater, and that "check-in" action may indirectly trigger the tracking process if it has been determined by manager 402 that the particular establishment has an associated trackable object of interest (e.g., a movie poster).

In another instance, the triggering of tracking is based on the geographical location of the user. Sensor data from sensor 124 may indicate that a user is a particular longitude/latitude location. In some embodiments, points of interests (such as attractions, restaurants, buildings, monuments, etc.) may be associated with a region defined by the area surrounding the point of interest up to a certain distance (e.g., circular area with a particular radius with the point of interest being the center of the area). The region may be the perimeter of a property (e.g., area defined by a building or a park). A point of interest may be associated with an object of interest (target object) that may be trackable by tracker 114. Based on the location of the user, the system may begin the tracking process without the user specifically requesting to do so. One example is for AR engine 116 to trigger the tracking process (i.e., to send control signal 312) when it is detected from sensor data from sensor 124 that a user has entered or is in proximity to a museum. Various objects such as paintings may be trackable in the museum, and tracking process is initiated transparently to the user by transmitting control signal 312.

In yet another instance, tracking process may be initiated when a user decides to use the AR client 7 in "tracking mode" where AR client 7 may look for trackable objects substantially continuously or live as a user moves about the world with the camera pointing at the surroundings. If the "tracking mode" is available, control signal 312 may be transmitted to tracker 114 upon entering "tracking mode". Likewise, when the user exits "tracking mode" (e.g., by pressing an exit or "X" button), control signal 312 may be transmitted to tracker 114 to stop tracking (e.g., to flush features store 302).

In general, the tracking process may initiate in the following exemplary situations: (1) after object recognition (triggered by the user), and (2) after a layer developer specifies the object id in a POI response (can be used to implement the "check-in" behaviour or the geolocation trigger), etc.

After tracking process in tracker 114 has been initiated with control signal 312, tracker 114 may begin to keep track of the state. The state may include a database on object(s) being tracked as well as the corresponding last known pose information for those objects and any other relevant data. For instance, state (e.g., as seen as state object 306) may include object IDs and corresponding data comprising at least one of: rotation, translation, orientation, pose and position information. At certain appropriate time (e.g., at periodic time intervals, depending on the device, up to about 30 times per second, at times when a frame is drawn, etc.), AR client 7 may query the state of AR client 7 (e.g., state object 306), and tracker 114 may return the state of AR client 7 in response to the query. For instance, tracker 114 has detected that an trackable object is in view, having an particular estimated pose. The object ID associated with the trackable object and pose information may be provided as a return to the state query to AR client 7. The state data is then used by an AR engine in AR client 7 to generate suitable graphics for display. In general, state data may be retrieved from tracker 114. State data may comprise identification information and three-dimensional pose information of a target object in the current image frame. Three-dimensional pose may be estimated based at least on an image frame and/or camera parameters. The state from tracker 114 may be queried periodically, depending on the how often the graphical user interface or AR application is refreshed. In some embodiments, as the user (or the trackable object) will almost always be moving, the state calculation and query may be done continuously while drawing each frame.

FIG. 7 shows an illustrative data structure for a tracking resource, according to one embodiment of the disclosure. Tracking resources database 112 or object storage 1010 stores resources (e.g., feature packages and features) that enables tracker 114 to effectively estimate the three-dimensional pose of a target object. Tracker 1004 may also be configured to produce feature packages as illustrated in FIG. 7. A tracking resource is associated with each target object, and is preferably stored in a relational database or the like in tracking resources database 112. In some embodiments, a tracking resource for a particular target object includes a feature package (e.g., feature package **750**) and at least one reference to a feature (e.g., feature **770**). An exemplary data structure for feature package **750** is shown. Feature package **750** includes an object ID for uniquely identifying the target object. Feature package **750** may include data for the reference image associated with the target object, such as data related to reference image size (e.g., in pixels) and/or reference object size (e.g., in mm).

Feature package **750** may include feature data. Feature data may be stored in a list structure of a plurality of features. Each feature, as seen in exemplary feature **770,** may include information identifying the location of a particular feature in the reference image in pixels. Feature package **750** may include a binary feature fingerprint that may be used in the feature matching process (e.g., by feature matcher **342).**

In operation, feature extractor **340** of **FIG. 6** may be used to extract candidate features from frame **104.** Using these exemplary feature package **750** and feature **770** as reference features, candidate features extracted by feature extractor **340** may be matched/compared with reference features to determine whether the target object is in the frame (or in view). Successful matches are then provided to two-dimensional correspondence estimator **344** to estimate two-dimensional transformations between the reference features and candidate features. Based on the estimated two-dimensional transformation and the camera parameters from buffer **106,** three-dimensional pose estimator **346** may estimate a three-dimensional pose of the target object. Information about three-dimensional pose is then stored in state object **306.**

In one embodiment, the augmentation shown in augmented reality view may be detached from the target object and viewed in "detached mode". In "detached mode" the augmentation is displayed out of perspective (e.g. optionally still on top with a reference or candidate image of the target object), but the augmentation appears stuck to the screen instead of the target object. For instance, a user may provide user input to "detach" the augmentation such that the augmentation may be viewed and/or edited in detached mode.

A detach functionality may be provided for the augmented reality content if desired. Sometimes, when tracking an image, the user has to hold his phone in an uncomfortable position (e.g. when looking at a billboard on a building). Accordingly the user is provided with an option on the augmented reality content to detach the augmentation from the target object, so that the user can look away from the actual target object, while still being able to see, edit and/or interact with the augmented reality content.

As an extension to the augmented reality content described herein, the augmented reality content may be displayed in and out of perspective with the target object (i.e., "detached" and "attached" to the target object, respectively). The augmented reality content may include a pointing direction, which is typically pointing in the same direction as the target object, if the augmented reality content is displayed in perspective with the target object. When the augmented reality content is displayed out of perspective, it is preferably generated and displayed to the user, with a pointing direction towards the user using the augmented reality device (e.g., parallel to the normal direction of the display screen). For example, to unpin/detach the augmented reality content, the augmented reality content may be animated to appear to come towards the user such that it can be displayed out of perspective with the target object. The augmented reality content may appear to move towards the user, following a path from the position of the target object to a position of the display.

While tracking, the tracker (e.g., tracker in **FIG. 6**) may maintain a rotation matrix, which contains the rotation and translation of the object relative to the camera (e.g., camera of the AR device). For the detached mode, in some embodiments, AR client **140** may render everything in three-dimensional context. However, the trick for making the graphical user interface appear out of perspective and stuck to the display screen is to define/calculate a rotation matrix that positions the graphical user interface as a fixed position relative to the camera at a fixed distance. In effect, the graphical user interface appears as if it is stuck to the display screen. In some embodiments, during the transition phase between attached and detached states, an interpolation is calculated by the tracker between the detached rotation matrix and the rotation matrix, and the graphical user interface is transformed and rendered accordingly.

As discussed before, a modelview matrix is used for rendering the augmented reality content in perspective with the target object. When rendering augmented content in detached mode, an alternative modelview matrix may be used. Instead of using the estimated camera transformation parameters, a fixed modelview matrix is defined as only containing a translation component to have the augmented content visible at a fixed distance behind the camera. For an improved user experience, switching between detached and non detached mode may be smoothed out by interpolating between the estimated camera modelview matrix and the detached modelview matrix within a given time interval.

Once an augmented reality content is generated and displayed in perspective with the target object, a user may unpin or detach the interactive graphical user interface from the target object. A user may provide user input to unpin or detach the interactive graphical user interface. User input may be received from user input part **15** or sensor (e.g., magnetometer **11,** accelerometer **12,** positioning **14,** etc.), and said use input may include a motion gesture, hand gesture, button press, voice command, etc. In one example, a user may press an icon that looks like a pin, to unpin the augmented reality content. To pin or attach the augmented reality content back to the target object, a user may similarly provide user input (e.g., such as pressing a pin icon) and the augmented reality content may then be animated to flow back to the target object and appear in perspective with the target object.

No matter whether the augmented reality content is attached or detached from the target object, a further feature may be provided to the user such that more content may be displayed to the user without using more real estate on the display. Generally, the augmented reality content is an object occupying a two-dimensional plane (e.g., like a sheet of paper) in the augmented reality environment. However, when a user is viewing the augmented reality content, the space of the augmented reality content on screen is limited. This is a more severe problem when the device being used has a small display screen. Thus, a solution may be needed to provide more content to the user on the display or within the space of the augmented reality content without expanding the real estate taken up by the augmented reality content. In some embodiments, an icon or button may be provided to the user on the augmented reality content to "flip" the augmented reality content from the front to its back (and vice versa). In this manner, the "back" or other side of the augmented reality content may be shown to the user, comprising other information/content that may be associated with the target object or the augmented reality content itself. In one embodiment, upon receiving user input to flip the augmented reality content, the graphical layer or graphics file making up the augmented reality content may be scaled, transformed, rotated and possibly repositioned such that flipping of the augmented reality content is visually animated and rendered for display to the user. In other words, frames of the graphical layer or graphics file making up the augmented reality content for display are generated by transforming the graphical layer or graphics file for successive frames such that augmented reality content appears visually to be flipping from one side to another.

In one example, if the augmented reality content is displayed in perspective with a target object and an indication to "flip" the augmented reality content is received (e.g., via a button on the augmented reality content or a gesture), the augmented reality content may be animated to flip over. The end result of the animation may display a "back side" of the augmented reality content in perspective with the target object. If needed, AR client may query object store **1010** for the content to be retrieved, displayed and rendered on the "back side" of the augmented reality content. In another example, if the augmented reality content is displayed out of perspective and a user indication to "flip" the augmented reality content is received, a similar process may occur, but with the end result of the animation displaying the "back side" of the augmented reality content still out of perspective with the target object.

In one embodiment, the augmented reality content has a first pose (i.e., position and orientation) within the augmented reality space. Upon receiving the user indication to flip the augmented reality content, a flipping animation causes the augmented reality content to rotate around one of the axes lying in the plane of the graphical user interface for 180 degrees from a the first pose to a second pose at the end of the flipping animation. The augmented reality content may become a two-sided object in the three-dimensional augmented reality space. The content for the "back-side" of the augmented reality content may be obtained at a suitable time (in some cases the content is pre-fetched when the augmented reality content is first used).

To form the two-sided object, another non-transformed graphical layer or graphics file for the augmented reality content using the back-side content may be composed with the front-side content (i.e., the original non-transformed graphical layer). Using the graphical layer or graphics file of the back-side and the front-side, a two-sided object having the original non-transformed graphical layer or graphics file on front side and the other non-transformed graphical layer on the back side may be created. Using any suitable three-dimensional graphics algorithms, an animated sequence of graphical layers may be generated by scaling, rotating and translating the two-sided object such that the graphical layers or the graphics file/image appears to flip in orientation (e.g., rotate the object in three-dimensional space from one side to an opposite side) resulting in a second pose of the augmented reality content being substantially 180 degrees different in orientation from the first pose. As such, the size of the augmented reality content object has not been increased or taken up more real estate of the display screen, and yet more content may be provided to the user via the space taken up on screen by the augmented reality content.

Again, the modelview matrix as described herein may be used to implement the flipping animation. To show more information about the augmented reality content, the augmented reality content may be flipped, exposing the backside of it. The flipping effect may be implemented by adding an additional rotation component to the estimated camera modelview matrix. This rotation is done around the origin point of the augmented reality content, giving the effect that it flips.

One embodiment of the disclosure may be implemented as a program product for use with a computer system. The program(s) of the program product define functions of the embodiments (including the methods described herein) and can be contained on a variety of computer-readable storage media. The computer-readable storage media can be a non-transitory storage medium. Illustrative computer-readable storage media include, but are not limited to: (i) non-writable storage media (e.g., read-only memory devices within a computer such as CD-ROM disks readable by a CD-ROM drive, ROM chips or any type of solid-state non-volatile semiconductor memory) on which information is permanently stored; and (ii) writable storage media (e.g., floppy disks within a diskette drive or hard-disk drive or any type of solid-state random-access semiconductor memory, flash memory) on which alterable information is stored.

It is to be understood that any feature described in relation to any one embodiment may be used alone, or in combination with other features described, and may also be used in combination with one or more features of any other of the embodiments, or any combination of any other of the embodiments. Moreover, the invention is not limited to the embodiments described above, which may be varied within the scope of the accompanying claims.

**Claims**

1. A method for enabling creation of user-generated content for a target object on a mobile user device having a digital imaging part, a display output, a user input part and an augmented reality client, wherein said augmented reality client is configured to provide an augmented reality view on the display output using a live image data stream from the digital imaging part, the method comprising:

　　receiving a first user input from the user input part to select a target object displayed in said display output;
　　in response to receiving the first user input, retrieving a two-dimensional image of the target object captured by the digital imaging part;
　　generating a graphical user interface object having at least part of the two-dimensional image of the target object or at least part of a reference image of the target object and rendering said graphical user interface object for display on the display output part;
　　receiving a second user input associated with user-generated content in a two-dimensional space, said user-generated content being spatially aligned with said two-dimensional image or said reference image;
　　determining a spatial relationship between (1) the second user input and (2) said two-dimensional image or said reference image;
　　receiving a third user input from the user input part to attach said user-generated content to said target object;
　　determining, in a tracker part of the augmented reality client, three-dimensional pose information associated with said selected target object on the basis of at least an image of the target object from the image data stream and tracking features associated with the target object; and
　　rendering said user-generated content for display in the display output in the augmented reality view, on the basis of said three-dimensional pose information and the spatial relationship, such that the user-generated content is displayed in perspective with the target object and rendered matching the three-dimensional pose of said selected target object in the display output.

2. Method according to claim 1, wherein determining the spatial relationship comprises:

　　providing a coordinate system for the two-dimensional image or the reference image;
　　determining two-dimensional coordinates of the second user input within user input part; and
　　determine a correspondence between the two-dimensional coordinates of the second user input and the coordinate system of two-dimensional image or the reference image.

3. Method according to any of the above claims, the method further comprising:

　　storing the second user input or a derivation of the second user input as a graphics data file in a non-transient computer readable medium;
　　associating the graphics data file with the identifier associated with target object and/or a user profile associated with the user device.

4. Method according to any of the above claims, wherein determining the three dimensional pose information comprises:

　　processing an image frame from image data stream captured by the digital imaging part on the mobile user device to extract the tracking features; and
　　wherein the determining of three-dimensional pose information is performed on the mobile user device on the basis of the tracking features and the image data stream.

5. Method according to claim 4, wherein:

　　the tracking features have a quality that is lower than the quality of other tracking features that are associated with the target object and are extracted by an object recognition system remote from the user device; and
　　the processing of the image frame to extract the tracking features having the lower quality is performed if the other tracking features from the object recognition system are not available at the user device.

6. Method according to any of the above claims, further comprising:

　　in response to receiving the first user input, rendering the two-dimensional image of the target object for display in the display output part, said target object being rectangular and has four corners;

preferably receiving a fourth user input indicating that the target object has a rectangular shape;

rendering, for display in the display output part, a user interface object comprising four points, said user interface object overlaying the two dimensional image of the target object and said four points defining an area of the two-dimensional image;

**11.** The method according to claim 10, further comprising:

receiving an eighth user input to attach the graphics object to the tracked object;

receiving updated three-dimensional pose information of the tracked object from the tracker part; and

updating the graphics object for display on the display output by scaling, rotating and translating the graphical object based on the updated three-dimensional pose information.

**12.** The method of any of the claims 8-11, further comprising:

receiving a ninth user input to flip the graphics object, the graphics object having a first pose, such that the graphics object is rotated from the first pose to a second pose by substantially 180 degrees around an axis lying in the plane of the graphics object from the first pose to a second pose;

retrieving back-side content to be displayed on the display output for a back-side of the graphics object;

updating the back-side of the graphics object to include the back-side content; and

generating an animated sequence for the graphics object from the first pose to the second pose by scaling, rotating and translating the graphics object.

**13.** An augmented reality client configured to enable creation of user-generated content on a user device having a digital imaging part, a display output and a user input part, wherein said augmented reality client is further configured to provide an augmented reality view on the display output using a live image data stream from the digital imaging part, the augmented reality client configured to execute the method according to any one of claims 1-12.

**14.** A computer program product, implemented on computer-readable non-transitory storage medium, the computer program product configured for, when run on a computer, executing the method according to any one of the claims 1-12.

**15.** Graphical user interface for enabling the creation of user-generated content on a user device having a digital imaging part, a display output and a user input part, comprising:

a first display state comprising a first user input listener configured to receive a first user input from the user input part to select a target object displayed in said display output;

a second display state, having a first transition from the first state in response to receiving the first user input, comprising:

a two-dimensional image of at least part of the target object;

a second user input listener being configured to receive a second user input associated with user-generated content in a two-dimensional space, said user-generated content being spatially aligned with said two-dimensional image or said reference image;

a third user input listener to receive a third user input from the user input part to attach said user-generated content to said target object;

a third display state, having a second transition from the second state in response to receiving the third user input, comprising said user-generated content for display in the display output, said user-generated content being rendered by:

determining a spatial relationship between (1) the second user input and (2) said two-dimensional image or said reference image;

determining, in a tracker part of the augmented reality client, three-dimensional pose information associated with said selected target object on the basis of at least an image of the target object from the image data stream and tracking features associated with the target object; and

rendering said user-generated content for display in the display output in an augmented reality view, on the basis of said three-dimensional pose information and the spatial relationship, such that the user-generated content is displayed in perspective with the target object and rendered matching the three-dimensional pose of said selected target object in the display output.

**16.** A user device having an augmented reality client configured to enable creation of user-generated con-

**EP 2 560 145 A2**

tent, said user device having a digital imaging part, a display output and a user input part, a processor for running an augmented reality client according to claim 13.

FIG. 1

FIG. 2

## User Device 1018

| Display 5 | Processor 6 |
|---|---|

| AR Client 7 | OS 8 | Storage 9 |
|---|---|---|

Communication Module 10

| Magneto-meter 11 | Accelero-meter 12 |
|---|---|

| Positioning 14 | Digital Imaging Part 13 |
|---|---|

User Input part 15

Output part 16

FIG. 3

**FIG. 4**

EP 2 560 145 A2

sensor
data; keywords,
etc.

frame

Image
Processor
202

Fingerprint
DB
132

Search
Engine
206

object ID(s)

FIG. 5

FIG. 6

EP 2 560 145 A2

Tracking
Resources
DB
112

750

| Feature Package | |
|---|---|
| Object ID | 143F3451 |
| Reference Image Size | 320 px x 240 px |
| Reference Object Size | 200 mm x 150 mm |
| Feature Data | { [Feat.1], [Feat.2], [Feat.3], ... } |

| Feature | |
|---|---|
| Reference Location | 124 x 178 |
| Feature Fingerprint | [binary data] |

770

FIG. 7